# EUROPEAN PATENT APPLICATION

(11) **EP 4 163 857 A1**
(43) Date of publication of application: **12.04.2023**
(21) Application number: 21803086.4
(22) Date of filing: 11.05.2021
(51) Int. Cl.: G06Q 30/06, G06Q 50/30, G08G 1/00, G08G 1/123, G08G 1/14, H02J 13/00, H04M 11/00

(54) **OPERATION ASSISTANCE SYSTEM**

(30) Priority: 11.05.2020 JP 2020083135; 11.05.2020 JP 2020083136; 11.05.2020 JP 2020083137; 11.05.2020 JP 2020083138; 12.05.2020 JP 2020083551; 11.11.2020 JP 2020187803; 10.12.2020 JP 2020204734; 25.12.2020 JP 2020216878
(71) Applicant: Luup Inc., Tokyo 150-0011 (JP)
(72) Inventor: OKAI Daiki, Tokyo 150-0011 (JP)
(74) Representative: Herrero & Asociados, S.L.
(86) International application number: PCT/JP2021/017877
(87) International publication number: WO 2021/230236

(57) **Abstract**

To grasp the state as to use of a vehicle.

An operation support system that supports an operation of shared scooter service, the system comprising: a use request input unit that receives a request for use from a mobile terminal of a user who intends to use a scooter, the request including designation of the scooter and a dismount station to be used; a use permission determination unit that permits the user of the scooter when there is a parking space available in the dismount station.

## Description

### Technical Field

The present invention relates to an operation support system.

### Background Art

Techniques are known for controlling from a server, the running of a vehicle in vehicle sharing (see Patent Literature 1).

### Citation List

### Patent Literature

Patent Literature 1: Japanese Patent Application Publication No. 2017-169051

### Summary of Invention

### Technical Problem

However, in the system described in Patent Literature 1, it is not possible to grasp a statue as to where a vehicle is used.

The present invention was made considering such background and is intended to provide a technology capable of grasp a status as to vehicle use.

### Solution to Problem

An operation support system that supports an operation of shared service of single-seat vehicle, the system comprises: a use request input unit that receives a request for use from a mobile terminal of a user who intends to use a vehicle, the request including designation of the vehicle and a dismount station to be used; a use permission determining unit that permits the user of the vehicle when there is a parking space available in the dismount station.

Other problems disclosed in the present application and methods for solving them are clarified in Description of Embodiments and Drawings of the invention.

### Effects of Invention

According to the present invention, it is possible to recognize a state of vehicle use.

### Brief Description of Drawings

Fig. 1 is a diagram illustrating a bicycle sharing service according to the present embodiment.
Fig. 2 is a diagram illustrating an example of the overall configuration of the operation support system according to the present embodiment.
Fig. 3 is a diagram illustrating a functional configuration of the communication device 11.
Fig. 4 is a diagram illustrating an example of a hardware configuration of the user terminal 13.
Fig. 5 is a diagram illustrating an example of a software configuration of the user terminal 13.
Fig. 6 is a diagram illustrating an example of a selection screen of the destination station.
Fig. 7 is a diagram illustrating an example of a state in which a parking condition of the bicycle 1 is being captured.
Fig. 8 is a diagram illustrating an example of a hardware configuration of the management server 20.
Fig. 9 is a diagram illustrating an example of a software configuration of the management server 20.
Fig. 10 is a diagram illustrating actions of the operation support system at the time of starting the use of the bicycle 1.
Fig. 11 is a diagram illustrating actions of the operation support system at finishing use of the bicycle 1.
Fig. 12 is a diagram illustrating a bicycle sharing service according to the present embodiment.
Fig. 13 is a diagram illustrating an example of a configuration of an operation support system according to the present embodiment.
Fig. 14 is a diagram illustrating an example of a hardware configuration of the management server 2.
Fig. 15 is a diagram illustrating an example of a software configuration of the management server 3.
Fig. 16 is a diagram illustrating a process flow relating to profit distribution.
Fig. 17 is a diagram illustrating a process of calculating distribution amount to the station owner 23.
Fig. 18 is a diagram illustrating a bicycle sharing service according to the present embodiment.
Fig. 19 is a diagram illustrating an example of the overall configuration of the operation support system according to the present embodiment.
Fig. 20 is a diagram illustrating an example of a hardware configuration of a computer used for the management server 20 and the replacer terminal 30.
Fig. 21 is a diagram illustrating a functional configuration of the communication device 11, the management server 20, and the replacer terminal 30.
Fig. 22 is a diagram illustrating actions of a system relating to replacement of the battery 14.
Fig. 23 is a diagram illustrating an example of the screen 61 for displaying vehicle body information pertaining to a replacement request.
Fig. 24 shows an example of the screen 62 for presenting reward amount for each station 2.
Fig. 25 is a diagram illustrating an electric scooter sharing service according to the present embodiment.
Fig. 26 is a diagram illustrating an example of the overall configuration of the operation support system according to the present embodiment.
Fig. 27 is a diagram illustrating an overview of the configuration of the scooter 1.
Fig. 28 is a diagram illustrating an example of an external appearance of the scooter 1 in which the retractable seat 15 is stored.
Fig. 29 is a diagram illustrating an example of an external appearance of the scooter 1 in which the retractable seat 15 is available.
Fig. 30 is a diagram illustrating an example of a software configuration of the control device 11.
Fig. 31 is a diagram illustrating an example of a hardware configuration of the management server 20.
Fig. 32 is a diagram illustrating an example of a software configuration of the management server 20.
Fig. 33 is a diagram illustrating actions of the operation support system according to the present embodiment.
Fig. 34 is a diagram illustrating a sharing service of the mobility 1 according to the present embodiment.
Fig. 35 is a diagram illustrating an example of the overall configuration of the operation support system according to the present embodiment.
Fig. 36 is a diagram illustrating an example of a hardware configuration of the user terminal 10.
Fig. 37 is a diagram illustrating an example of a software configuration of the user terminal 10.
Fig. 38 is a diagram illustrating an example of a hardware configuration of the management server 20.
Fig. 39 is a diagram illustrating an example of a software configuration of the management server 20.
Fig. 40 is a diagram illustrating actions of the operation support system according to the present embodiment.

### Description of Embodiments

### <First Embodiment>

Hereinafter, an operation support system for a vehicle sharing service according to an embodiment of the present invention will be described. While in the present embodiment, it is assumed that a motorized bicycle sharing service (including a rental service), it can be applied to a shared service of any vehicle. Such a vehicle can include a single-seat vehicle (personal mobility) in general.

The vehicle may be a single-seat personal mobility with an electric motor having a total length of 1 meter or less. The vehicle may be a bicycle, a scooter, a skateboard, or the like which is capable of switching between an electric (automatic) mode and an electric assist mode. The vehicle may be one that is not required to secure a parking place generally. The vehicle may include, for example, a bicycle, a scooter (also referred to as a kickboard, a kick skater), a skateboard, a parallel motorcycle, an inverted motorcycle (such as Segway, or the like), a self-sustaining stable monocycle, and so forth. The vehicle may also include a motorized bicycle and a motorcycle. The vehicle may include one with a maximum speed of less than 30 km/h (e.g., a bicycle with motor), one with a maximum speed of less than 24 km/h (e.g., an electric assisted bicycle), and one with a maximum speed of less than 20 km/h (e.g., an electric kick board is supposed).

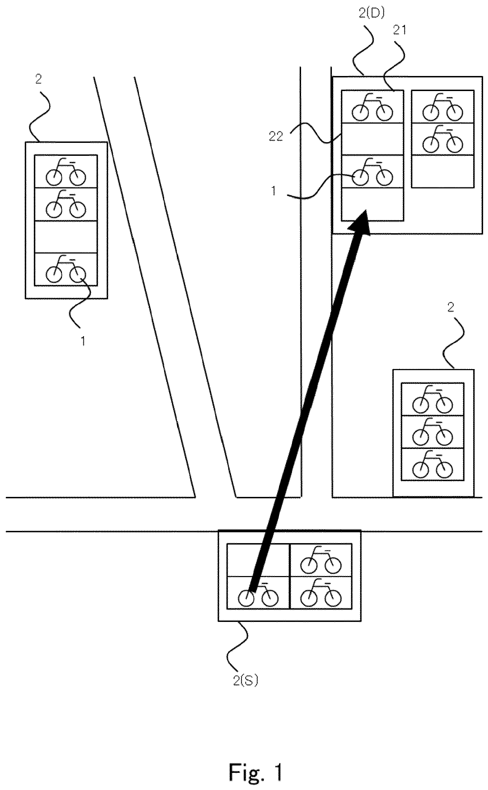

Fig. 1 is a diagram illustrating a bicycle sharing service according to the present embodiment. The bicycles 1 are parked at stations 2 located in various places. In the present embodiment, the station 2 means a location where the bicycle 1 can be parked. The station 2 is, for example, a parking lot or a bicycle parking lot. The station 2 may be a place where a vehicle can be stored, and the number of vehicles that can be parked may not be fixed, but in the present embodiment, the station 2 may park up to a predetermined number of bicycles 1. That is, at least one of in-use spot 21 and empty spot 22 may be included in each station 2. When a user of the bicycle sharing service is to travel on the bicycle 1 from a departure station 2(S) to a destination station 2(D), the user of the bicycle sharing service designates the destination station 2(D) before he/she starts using the bicycle 1. If the destination station 2(D) has an empty spot 22, use of the bicycle 1 is permitted, and the bicycle 1 is automatically unlocked and made available to the user.

The station 2 may also be a collection of physically discrete ground or building floor partition.

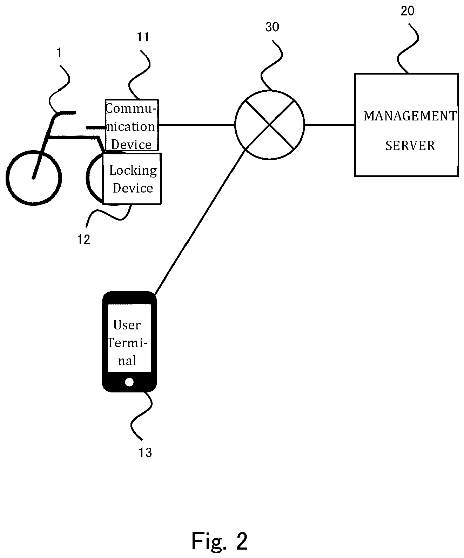

Fig. 2 is a diagram illustrating an example of the overall configuration of the operation support system according to the present embodiment. The operation support system of the present embodiment includes a management server 20. The management server 20 is communicatively connected via a communication network 30 with each communication device 11 provided with the bicycle 1 and a user terminal 13. The communication network 30 is, for example, the Internet and may be constructed by a public telephone network, a cellular telephone network, a wireless communication line, an Ethernet (registered trademark), or the like.

The bicycle 1 is also provided with a locking device 12, and the communication device 11 may also control the locking device 12 for the locking and unlocking. In the present embodiment, the communication device 11 controls the locking device 12 for the locking and unlocking in response to an instruction received from the management server 20 but may be configured to control the locking device 12 according to, for example, control from the user terminal 13.

The user terminal 13 is a portable terminal used by the user, such as a smartphone, tablet computer, personal computer, or the like. The user terminal 13 is equipped with a camera and can capture a status of the bicycle 1.

The management server 20 may be a general-purpose computer, such as a workstation or personal computer, or may be logically implemented by cloud computing. The management server 20 can determine whether a user can use the bicycle 1 and manage the usage status.

### <Communication Device 11 >

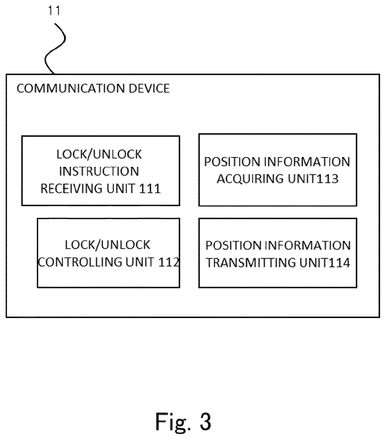

Fig. 3 is a diagram illustrating a functional configuration of the communication device 11. The communication device 11 includes the lock/unlock instruction receiving unit 111, the lock/unlock controlling unit 112, the position information acquiring unit 113, and the position information transmitting unit 114. Note that each of these functional sections may also be implemented by logic circuit or may also be implemented by a general-purpose processor executing a program.

The lock/unlock instruction receiving unit 111 receives instruction instructing to lock/unlock the bicycle 1 (hereinafter, lock instruction or unlock instruction, and combination of the lock instruction and the unlock instruction will be hereinafter lock/unlock instruction). In the present embodiment, the lock/unlock instruction is transmitted from the management server 20, and the lock/unlock instruction receiving unit 111 receives the transmitted lock/unlock instruction.

The lock/unlock controlling unit 112 controls the locking device 12 as to the locking or the unlocking in response to the lock/unlock instruction. The control process of the locking device 12 by the lock/unlock controlling unit 112 is not described herein as using a known method.

The position information acquiring unit 113 may acquire the position of the bicycle 1 based on the GPS (Global Positioning System) signal received by the GPS receiver (not shown; may be provided by the communication device 11, or may be obtained from an external sensor, for example).

The position information transmitting unit 114 transmits the position information acquired by the position information acquiring unit 113. In the present embodiment, the position information transmitting unit 114 can periodically transmit the position information of the bicycle 1 to the management server 20 while the bicycle 1 is in use. The position information transmitting unit 114 may transmit the position information to the management server 20 according to any predetermined time cycle, such as for example, 1 second, 1 minute, 5 minutes, and 10 minutes. The position information transmitting unit 114 may transmit the position information, for example, when the travel distance of the bicycle 1 exceeds a predetermined value.

### <User Terminal 13>

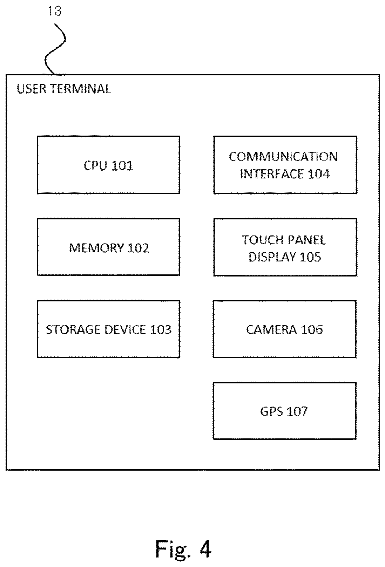

Fig. 4 is a diagram illustrating an example of a hardware configuration of the user terminal 13. The illustrated configuration is exemplary and may have other configurations. The user terminal 13 includes a CPU 101, a memory 102, a storage device 103, a communication interface 104, a touch panel display 105, a camera 106, and a GPS 107. The storage device 103 may be, for example, a hard disk drive, a solid-state drive, a flash memory, or the like, for storing various types of data or programs. The communication interface 104 is an interface for connecting to the communication network 30, such as an adapter for connecting to an Ethernet (registered trademark), a modem for connecting to a public telephone network, a wireless communication device for performing wireless communication, a USB (Universal Serial Bus) connector for serial communication, or an RS232C connector. The touch panel display 105 can input and output data. The GPS 107 can acquire the position of the user terminal 13.

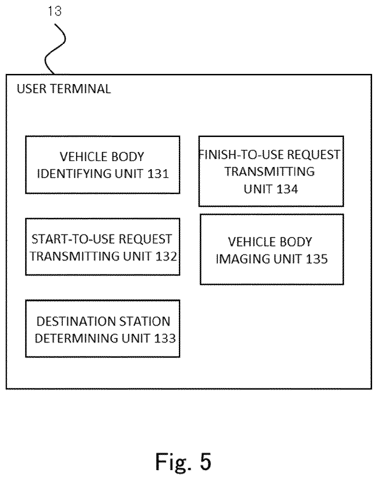

Fig. 5 is a diagram illustrating an example of a software configuration of the user terminal 13. The user terminal 13 may include a vehicle body identifying unit 131, a start-to-use request transmitting unit 132, a destination station determining unit 133, a finish-to-use request transmitting unit 134, and a vehicle body imaging unit 135.

The functional units of the user terminal 13 may be realized, for example, by reading out a program stored in the storage device 103 into the memory 102 and executing the program.

The vehicle body identifying portion 131 identifies a vehicle body (bicycle 1) that the user is to use. In the present embodiment, a code such as a QR code (registered trademark) that is encoded identification information (vehicle body ID) of the bicycle 1 is attached to the bicycle 1, and the vehicle body identifying unit 131 of the user terminal 13 can acquire the vehicle body ID by decoding the image captured by the camera 106. The vehicle body identifying unit 131 may, for example, with the vehicle body ID printed on the bicycle 1, accept the input of the vehicle body ID from the user, or may receive the vehicle body ID from the devices provided to the bicycle 1 by near distance communication such as Bluetooth (registered trademark). In addition, the vehicle body identifying unit 131 may acquire the vehicle body ID of the bicycle 1 by any other method.

The start-to-use request transmitting unit 132 transmits a request intended to use the bicycle 1 (start-to-use request) to the management server 20. The user ID indicating the user and the vehicle body ID indicating the bicycle 1 are set in the start-to-use request. If the station as a destination (destination station) is specified by the user in advance, the destination station is also set in the start-to-use request.

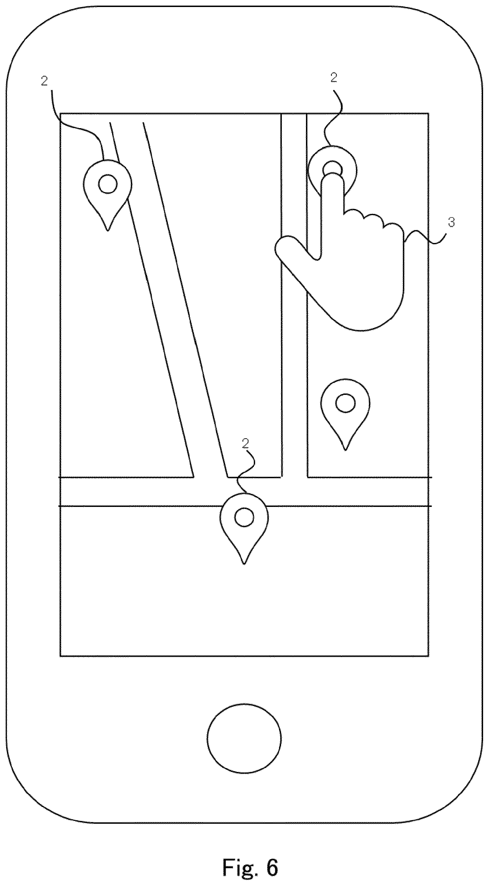

The destination station determining unit 133 determines the destination station. The destination station determining unit 133 may, for example, display a map to accept a designation of the destination and output stations located near the specified destination to allow the user to select a destination station. For example, the destination station determining unit 133 may first accept the designation of the destination. The designation of the destination may be accepted as designation of a location on the map as described above and may accept the designation such as area name or station name. The destination station determining unit 133 can set a specified destination and transmit to the management server 20, a request (station request) for a list of stations located near the destination. The destination station determining unit 133 can accept the selection of the destination station from the list of stations which are returned from the management server 20. Fig. 6 is a diagram illustrating an example of a selection screen of the destination station. As shown in the figure, the destination station determining unit 133 may, for example, display a map on a screen and icons for a list of stations 2 on the map. The destination station 2 is specified by a user selecting the icon with a finger 3 or the like. The start-to-use request transmitting unit 132 can set the designation of the destination station 2 received by the destination station determining unit 133 in the start-to-use request and transmit it to the management server 20.

As described later, if the destination station 2 has an empty slot, use of the bicycle 1 is permitted, and the locking device 12 of the bicycle 1 is unlocked as instructed by the management server 20, and the user can use the bicycle 1.

The finish-to-use request transmitting unit 134 transmits a request to finish the use of the bicycle 1 (finish-to-use request) to the management server 20. The user ID indicating the user and the vehicle body ID indicating the bicycle 1 are set in the finish-to-use request. The parking image, described below, may also be set in the finish-to-use request from the beginning.

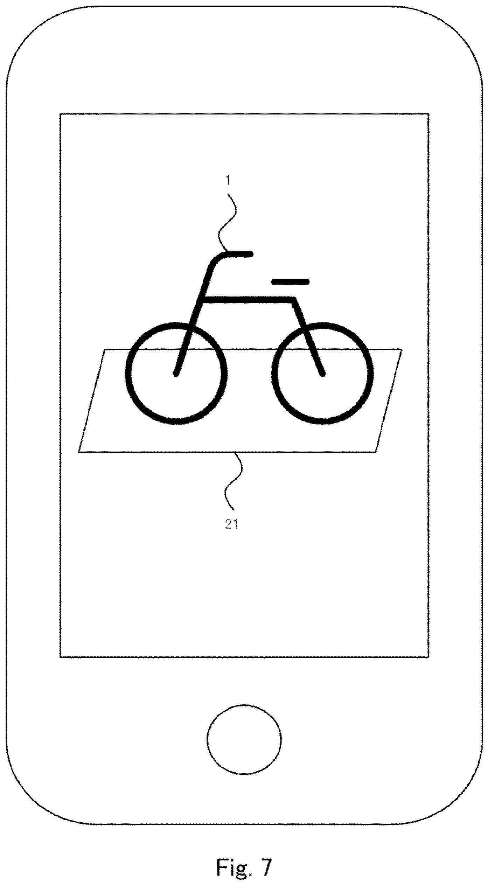

The vehicle body imaging unit 135 controls the camera 106 to capture an image of the external appearance of the bicycle 1. In the present embodiment, the vehicle body imaging unit 135 expects that after the bicycle 1 arrives at the destination station, the condition in which the bicycle 1 is parked is captured. The vehicle body photographing unit 135 may be manually activated by the user and may output a message instructing the user to capture an image of the parking state. Fig. 7 is a diagram illustrating an example of a state in which a parking condition of a bicycle 1 is captured. As shown in the figure, the user can capture an image of the bicycle 1 that was parked after a ride-off of the vehicle, and the vehicle body imaging unit 135 may acquire the captured image (called a parking image). The finish-to-use request transmitting unit 134 transmits an image captured by the vehicle body imaging unit 135 or acquired by the vehicle body imaging unit 135 to the management server 20. As such, the use of bicycle 1 ends.

### <Management Server>

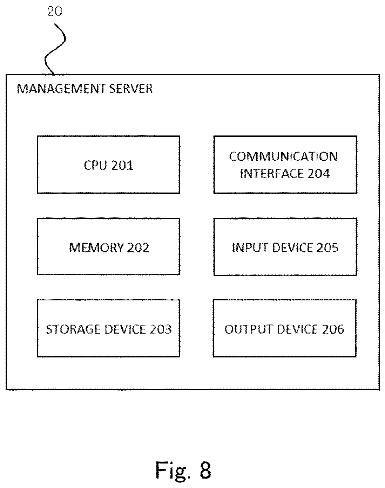

Fig. 8 is a diagram illustrating an example of a hardware configuration of the management server 20. The illustrated configuration is exemplary and may have other configurations. The management server 20 includes a CPU 201, a memory 202, a storage device 203, a communication interface 204, an input device 205, and an output device 206. The storage device 203 may be, for example, a hard disk drive, a solid-state drive, a flash memory, or the like, for storing various types of data or programs. The communication interface 204 is an interface for connecting to the communication network 30, such as an adapter for connecting to an Ethernet (registered trademark), a modem for connecting to a public telephone network, a wireless communication device for performing wireless communication, a USB (Universal Serial Bus) connector for serial communication, or an RS232C connector. The input device 205 may be, for example, a keyboard or mouse, a touch panel, a button, a microphone, or the like, for inputting data. The output device 206 may be, for example, a display, a printer, a speaker, or the like, for outputting data.

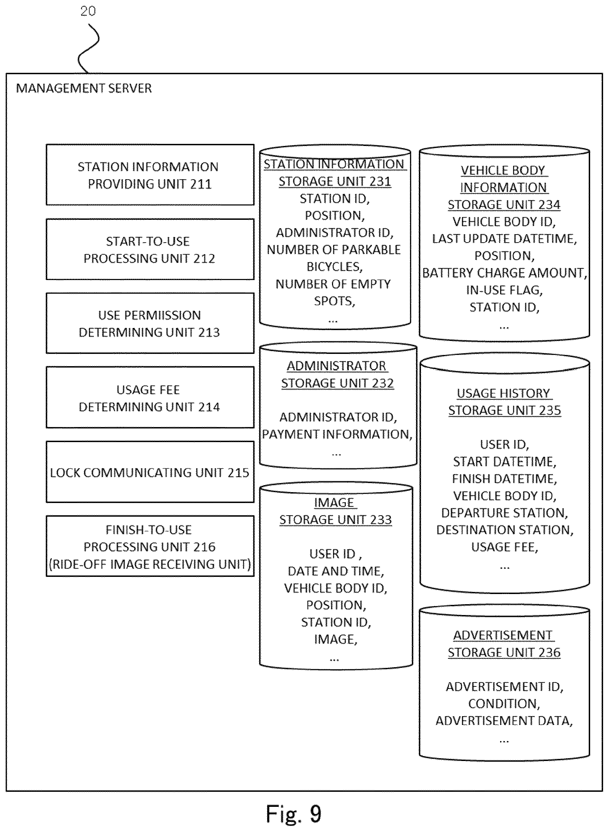

Fig. 9 is a diagram illustrating an example of a software configuration of the management server 20. The management server 20 includes a station information providing unit 211, a start-to-use processing unit 212, an use permission determining unit 213, a usage fee determining unit 214, a lock communicating unit 215, a finish-to-use processing unit 216, a station information storage unit 231, an administrator storage unit 232, an image storage unit 233, a vehicle body information storage unit 234, a usage history storage unit 235, and an advertisement storage unit 236.

The above function units 211 to 216 are realized by reading out a program stored in the storage device 203 to the memory 202 and executing it, and the storage units 231 to 236 can be realized as part of the storage area provided by the memory 202 and the storage device 203.

The station information storage unit 231 stores information relating to a station 2 (station information). A position of station 2 (which may be a representative position and may be identified by latitude and longitude, for example), an administrator ID that identifies an administrator who manages the station 2, the number of bicycles 1 that may be parked at the station 2 (parkable number), the number of bicycles 1 that can be parked at the moment (the number of empty spots 22), and so forth are included in the station information, so as to associate with the station ID that identifies station 2. If the station 2 is not managed by a third party, a value may not be set to the administrator ID.

The administrator storage unit 232 stores information regarding an administrator (administrator information). An administrator ID identifying the administrator and payment information may be included in the administrator information. Payment information can be, for example, the information required when reward to the administrator is to be given. The reward pertaining to providing the station 2 can be given based on the payment information.

The image storage unit 233 records the parking image. The image storage unit 233 may include the user ID identifying a user who has captured the parking image, a date and time of capturing the parking image, a vehicle body ID indicating the bicycle 1 which is displayed in the parking image, a position where the parking image has been captured, a station ID indicating the station 2 in which the bicycle 1 which is shown in the parking image is parked, and the image data of the parking image.

The vehicle body information storage unit 234 stores information regarding the bicycle 1 (vehicle body information). A vehicle body ID identifying the bicycle 1, a date and time when the vehicle body information was last updated (last update), a position of the bicycle 1 at the last update date and time, a battery charge amount of the bicycle 1, a flag indicating whether the bicycle 1 is currently in use (in-use flag), and a station ID indicating station 2 at which the bicycle is parked if bicycle 1 is parked may be included in the vehicle body information. The vehicle body information can be updated regularly.

The usage history storage unit 235 stores a usage history of the bicycle 1. A user ID identifying the user who used the bicycle 1, date and time of the start and finish of the use of the bicycle 1, a vehicle body ID identifying the bicycle 1 used by the user, a station 2 at which the user started using the bicycle 1 (departure station), a station 2 at the destination of bicycle 1 (destination station), and a usage fee may be included in the usage history.

The advertisement storage unit 236 stores information related to advertisement (advertisement information). A condition for outputting the advertisement and advertisement data are included in the advertisement information, so as to associate with an advertisement ID identifying the advertisement. The condition may be one corresponding to various information such as, for example, time condition such as when the bicycle 1 is in use or when the use of the bicycle 1 is finished, spatial condition such as whether the bicycle 1 is parked at a particular station 2 and whether the bicycle 1 passes a particular place (whether the position in the vehicle body information passes near the particular place), and a condition corresponding to an attributes of the user such as whether the user is a woman. The advertisement data may be, for example, screen data described by HTML, or may be movie data, still image data, plain text data, or the like.

The station information providing unit 211 provides the station information to the user terminal 13. The station information providing unit 211 may provide the station information in response to a request from the user terminal 13 (which may be a start-to-use request or another request). For example, when the start-to-use request includes a destination (or a destination coordinate, etc.), the station information providing unit 211 may retrieve from the station information storage unit 231, the station information near the specified destination or the station information having a position within a predetermined distance from the designated coordinate, and respond the list of search results. The station information providing unit 211 may, for example, broadcast the station information periodically or transmit the station information to each of the user terminals 13 to which the session is established.

The start-to-use processing unit 212 carries out the processing pertaining to the start of use of the bicycle 1 by the user. In the present embodiment, the start-to-use processing unit 212 receives the start-to-use request from the user terminal 13 and makes the use permission determining unit 213 described below determine whether use of the bicycle 1 designated in the received start-to-use request is permitted. In addition, when the destination station 2 is not set in the start-to-use request, the start-to-use processing unit 212 may transmit a message instructing the user terminal 13 to set the destination station 2. When the destination station 2 is specified, the start-to-use processing unit 212 may make the use permission determining unit 213 described below determine whether use of the bicycle 1 is permitted. When the use permission determining unit 213 determines that it is permitted, the start-to-use processing unit 212 makes the lock communicating unit 215 described later transmit an unlocking order to unlock the bicycle 1 designated in the start-to-use request, and the start-to-use processing unit 212 may add 1 to the number of empty spots in the station information of the departure station (the station where the designated bicycle 1 is currently parked, that is, the station ID represented by the station ID included in the vehicle body information), and subtract 1 from the number of empty spots in the station information corresponding to the destination station. Further, the start-to-use processing unit 212 may update the in-use flag to true in the vehicle body information corresponding to the specified bicycle 1.

The start-to-use processing unit 212 may transmit an advertisement at the start of use (the advertisement transmitting unit). For example, the start-to-use processing unit 212 may retrieve from the advertising storage unit 236, the advertisement information satisfying the condition and transmit the advertisement data of the retrieved advertisement information to the user terminal 13. The start-to-use processing unit 212 may, for example, retrieve advertisement information related to the departure station or the neighborhood of the destination station. In addition, when the plurality of advertisement information can be retrieved, the start-to-use processing unit 212 may preferentially transmit the advertisement data in which the condition corresponding to a location near the departure station or the destination station is set.

The use permission determining unit 213 determines whether use of the bicycle 1 is permitted. The use permission determining unit 213 may determine that use of the bicycle 1 is not permitted, for example, when the in-use flag of the vehicle body information is true. The use permission determining unit 213 may determine that use of the bicycle 1 is not permitted if the battery charge amount of the vehicle body information is less than a predetermined value. In addition, the use permission determining unit 213 may determine that use of the bicycle 1 is not permitted when the number of empty spots in the station information of the destination station is 0. Further, if the user ID is registered in the blacklist (not shown), for example, the use permission determining unit 213 may determine that use of the bicycle 1 is not permitted. If the above-described determination that use the bicycle 1 is not permitted is not made, the use permission determining unit 213 may determine that the bicycle 1 is permitted to use.

The usage fee determining unit 214 determines usage fee for the bicycle 1. The usage fee determining unit 214 may determine the usage fee according to, for example, usage time of the bicycle 1. The usage fee determining unit 214 may, for example, determine a predetermined amount corresponding to the type of the bicycle 1 as the usage fee. The usage fee determining unit 214 may also perform dynamic pricing, in which the price varies according to, for example, an attribute of the user or the usage history. The usage fee determining unit 214 may, for example, set a cheaper usage fee for a user with a higher frequency of use, set a cheaper usage fee for a user with a specific campaign target attribute, and determine a gradually cheaper usage fee when the usage frequency (number of usage histories) is predetermined number or more.

The usage fee determining unit 214 may also set a fixed or dynamic usage fee for each station. For example, the usage fee determining unit 214 may determine the usage fee depending on the number of empty spots (so that more the number of empty spots, the lower the fee becomes). In addition, the usage fee determining unit 214 may determine the usage fee in accordance with a use rate of the destination station (the ratio of the number of times used as a departure station or as a destination station during a predetermined period, such as one day or one week, with respect to the maximum number of vehicles that can be parked) so that the higher the usage rate becomes, the higher the use rate becomes. The usage fee determining unit 214 can also determine the usage fee depending on a distance from the station to a train station, a bus station, a commercial facility, or the like (so that the shorter the distance is, the higher the usage fee becomes).

The usage fee determining unit 214 may also set the usage fee according to a route of the bicycle 1. For example, the usage fee determining unit 214 may charge higher usage fee if the bicycle 1 passes through a specific route. Locations that are likely to be crowded, such as luminary street, one with sporting event, or one with live event, can be charged higher. Conversely, the usage fee determining unit 214 may charge lower usage fee if the bicycle 1 passes through a predetermined route. For example, if it is desired to increase traffic on the roads facing a commercial facility or shop, or if it is desired to revitalize a sideway by events or festivals, or if it is desired to have a new commercial facility recognized, the usage fee may be set cheap for promotional purposes. In this case, for example, the commercial facility, etc. may be the one to be charged. The usage fee determining unit 214 may, for example, detect that the bicycle 1 is proceeding toward the road for which higher charge is applied, or detect the presence of the bicycle 1 on the road for which higher charge is applied, send an alert to the user terminal (or the communication device 11 of the bicycle 1) and output the alert from the user terminal or the communication device 11. In addition, the usage fee determining unit 214 may, for example, notify the user terminal or the communication device 11 that charging fee of a road parallel to the road on which the bicycle 1 is currently in progress is cheaper.

The lock communication unit 215 controls the locking and unlocking of the locking device 12 of the bicycle 1. In the present embodiment, the lock communication unit 215 may unlock the lock device 12 by transmitting the unlocking instruction to the communication device 11.

The finish-to-use processing unit 216 performs processing that is necessary at finishing use of the bicycle. When the parking image is not included in the finish-to-use request, the finish-to-use processing unit 216 may transmit a message instructing the user terminal 13 to capture a parking image. In addition, the finish-to-use processing unit 216 (a ride-off image receiving unit) can register the parking image received from the user terminal 13 in the image storage unit 233 by attaching thereto a user ID indicating the user, the date and time, the vehicle body ID, the position information, and the station ID indicating the destination station. The finish-to-use processing unit 216 determines whether or not the bicycle 1 is at the destination station 2 based on the position information set in the finish-to-use request or the position information of the vehicle body information, and when it is determined that the bicycle 1 has not arrived at the destination station 2, the finish-to-use processing unit 216 determines that the use is not yet finished, and transmits a message indicating accordingly to the user terminal 13. The finish-to-use processing unit 216 may update the in-use flag of the vehicle body information corresponding to the vehicle body ID set in the finish-to-use request to false.

The finish-to-use processing unit 216 may transmit an advertisement to the user terminal 13 upon finishing the use. For example, in response to the finish-to-use request, the finish-to-use processing unit 216 may transmit to the user terminal 13 advertisement data of one of the advertisement information that satisfies the condition.

### <Action>

Hereinafter, actions of the operation support system according to the present embodiment will be described.

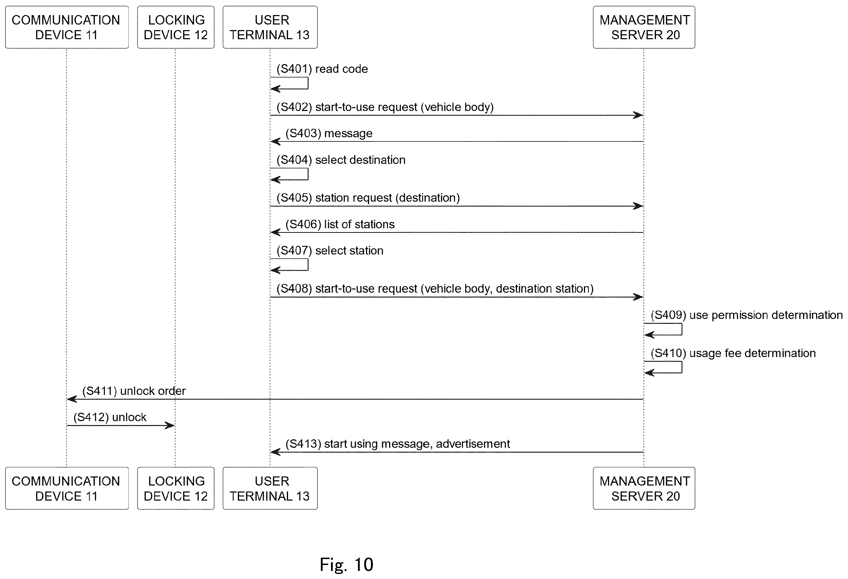

Fig. 10 is a diagram illustrating actions of the operation support system when use of the bicycle 1 starts. When bicycle 1 is to be used, the user reads the QR code (registered trademark) attached to bicycle 1 using the user terminal 13 (S401) and acquires the vehicle body ID. The user terminal 13 transmits a start-to-use request to which the acquired vehicle body ID is set, to the management server 20 (S402). The management server 20 responds a message (S403) indicating to set the destination station. The user terminal 13 receives a selection of destination from the user (S404). The selection of destination can be made by accepting the designation of a predetermined position on the map or accepting the designation of the station name, area name, etc. The user terminal 13 transmits a station request to which the destination is set, to the management server 20 (S405), and the management server 20 responds a list of stations near the destination (S406).

The user terminal 13 outputs the responded list of stations and may accept the designation of the destination station within the list (S407). The user terminal 13 may accept the designation of the destination station through, for example, the screen as shown in FIG. 6. The user terminal 13 transmits to the management server 20 the start-to-use request to which the vehicle body ID and the station ID indicating the destination station are set (S408).

The management server 20 determines whether it is permitted to use the bicycle 1 according to the received start-to-use request (S409). The determination of whether use of the bicycle 1 is permitted is performed by the above-described use permission determining unit 213. If it is determined that bicycle 1 may be used, the usage fee is determined (S410). The usage fee is determined by the usage fee determining unit 214 as described above. The management server 20 transmits an unlock order to the communication device 11 of the bicycle 1 indicated by the vehicle body ID (S411), and the communication device 11 controls and unlocks the locking device 12 in response to receiving the unlock order (S412).

On the other hand, the advertisement data is transmitted to the user terminal 13 along with a message indicating that the use has been started from the management server 20 (S413). The advertisement data is displayed with the message at the user terminal 13.

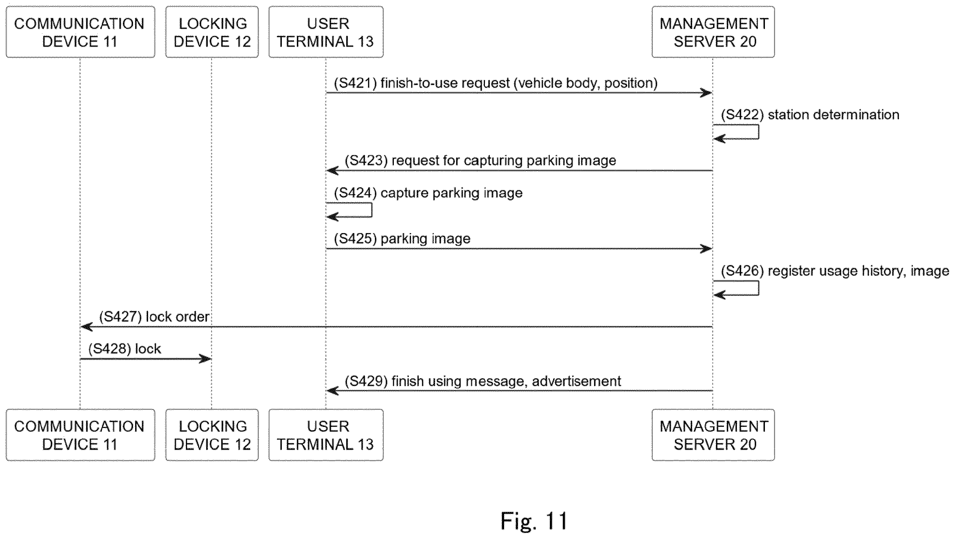

Fig. 11 is a diagram illustrating actions of the operation support system at finishing use of the bicycle 1. After the user rides the bicycle 1 to the destination station, he/she operates the user terminal 13 to transmit the finish-to-use request to the management server 20 in order to finish the use of the bicycle 1 (S421). The vehicle body ID and the current position of the bicycle 1 are set in the finish-to-use request.

The management server 20 may determine the station at which the bicycle 1 has presently arrived according to the present position (S422). If a parking image is not set in the finish-to-use request, the management server 20 may transmit a message instructing the user terminal 13 to capture a parking image (S423).

The user terminal 13 displays the message and, in response to this display, the user captures a parking condition of the bicycle 1 using the user terminal 13 (S424). The user terminal 13 transmits the captured parking image to the management server 20 (S425), the image is stored in the image storage unit 233 and the usage history is also registered (S426). The management server 20 further transmits a lock order to the bicycle 1 (S427).

When the communication device 11 of the bicycle 1 receives the lock order from the management server 20, the locking device 12 can be controlled and locked accordingly (S428).

On the other hand, the management server 20 transmits an advertisement data to the user terminal 13 as well as a message indicating that the use has been finished (S429). The advertisements data is displayed with the message at the user terminal 13.

Although the present embodiment has been described above, the above-described embodiment is intended to facilitate the understanding of the present invention and is not intended to limit the interpretation of the present invention. The present invention may be modified and improved without departing from the spirit thereof, and the present invention also includes its equivalent.

For example, in the present embodiment, the communication device 11 and the management server 20 communicate each other directly. However, the communication between them may not be limited thereto, and a computer such as an API server may be interposed between the communication device 11 and the management server 20.

In the present embodiment, the management server 20 is defined as one computer, but the management server 20 may be implemented by a plurality of computers and various functions provided by the management server 20 may be distributed to a plurality of computers.

### <Not to Specify Vehicle Body>

In the present embodiment, the vehicle body ID indicating the bicycle 1 and the destination station are specified in the start-to-use request, but the vehicle body ID may not be set while the destination station is set. In this case, when the user makes a reservation, only the destination station is set, and afterwards the user determines a bicycle 1 to use at the departure station. Then, the user may set the vehicle body ID to the second start-to-use request to be transmitted to the management server 20.

### <To Specify Departure Station>

In addition, the departure station may be set instead of the designation of the vehicle body in the start-to-use request. In this case, the user terminal 13 may include a departure station setting unit and may accept the designation of the departure station through a screen similar to that shown in Fig. 6. In addition, the use permission determining unit 213 may determine that use of the bicycle 1 is permitted when the available bicycle 1 is present at the departure station and there is a vacancy in the destination station. Also, if multiple types of vehicles (e.g., electric assisted bicycles, electric bicycles, electric scooters, electric assist scooters, electric kickboards, electric kickboards, electric skateboards, electric assist skateboards, electric parallel motorcycles, etc.) are present at the station 2 (i.e., provided for shared services), the type of vehicle may be specified in the start-to-use request. In this case, the management server 20 may manage which type of vehicle is parked at which station 2 and determine whether the type of vehicle specified in the start-to-use request is available.

### <To Specify Usage/Arrival time>

In addition, the start-to-use request may specify the usage time or the arrival time at the destination station. In this case, at least the destination station is specified in the start-to-use request. In the start-to-use request, a vehicle body ID may further be specified or a departure station may further be specified. The start time of use may further be specified in the start-to-use request. When the departure station and the start time of use are specified in the start-to-use request, the use permission determining unit 213 may determine that a bicycle 1 is bookable even if the bicycle 1 parked at the specified departure station does not exist but it is scheduled that another user will arrive at the destination station by the departure time. The schedule of arriving at the destination station may be calculated according to the time of use or time of arrival.

### <To Allow Overbooking>

Further, in the present embodiment, the reservation cannot be made unless the destination station has an empty spot, but the reservation may be made even when there is no spot available at the destination station. In this case, for example, the use permission determining unit 213 may determine that use of the bicycle 1 is permitted if the number of available spots in the station information of the destination station is equal to or more than a negative threshold value (i.e., -1 multiplies the allowable number).

Here, the management server 20 may transmit a message to the user to induce the use of the bicycle 1 at the station in response to receiving more than a predetermined number of reservations when there is no spot available at the destination station. The message may be transmitted, for example, as a message such as an email or chat, or it may be transmitted as a push notification to an application running at the user terminal 13. At this time, the management server 20 may provide a reward to the user. For example, the management server 20 may issue points to users, discount fees, or issue coupons.

### <Prediction of Allowable Number of Overbooking>

In addition, when a reservation is accepted even if there is no empty spot at the destination station, the management server 20 may predict the number of bicycles used by other users using this destination station as the departure station, by the time the user pertaining to the reservation arrives at the destination station, and determine whether a reservation can be accepted by regarding the predicted number as the number of bicycles that may be reserved (allowable number) when there is no empty spot at the destination station.

### <Reward on Failing to Ride-off by Overbooking>

In addition, when a reservation is accepted even if there is no empty spot at the destination station, if there is no empty spot 22 when the user pertaining to the reservation arrives and is to ride off at the destination station, the management server 20 may transmit a message instructing the user to move to a station 2 near the destination station and give the user a certain reward.

In this case, the management server 20 may detect that the user cannot park at the destination station (i.e., the user cannot finish the use of the bicycle 1) by receiving from the user terminal 13, the message indicating failing to park (to which the vehicle body ID indicating the bicycle 1 to finish the use of or the station ID of the destination station is set).

In addition, if the station ID of the destination station is set in the finish-to-use request received from the user terminal 13, the management server 20 may detect failing to park because the number of empty spot in the station information indicated by the station ID is 0 or less. In addition, the management server 20 may detect failing to park because the number of empty spots in the station information indicated by the station ID of the vehicle body information corresponding to the vehicle body ID set in the finish-to-use request received from the user terminal 13 is 0 or less.

The management server 20 may retrieve the station information corresponding to of a station located within a predetermined distance from the location of the destination station (the location in the station information) when failing to park at the target station is detected. Here, the management server 20 may search for station information that is closest to the location of the destination station. In addition, the management server 20 may search for the station information corresponding to a location of a station within a predetermined distance (or the closest position) from the location of the destination station in which the number of empty spots is a predetermined number (for example, one) or more.

The management server 20 transmits a message indicating to move the bicycle 1 (to change the destination station) to the user terminal 13, the message also including a station 2 indicated by the searched station information. When the user terminal 13 receives the message, the user terminal 13 may display a candidate station 2 on the map as in Fig. 6, for example. Here, the reward given by the management server 20 to the user may include, for example, discount (including making it for free) of the usage fee for the bicycle 1, monetary payment more than the usage fee, issuing of a coupon, and issuing of a point.

In this case, when a reservation is accepted even if the destination station does not have empty spot, the management server 20 may notify the user that there is no empty spot at the destination station and that there is a possibility that the user might have to move to the neighbor station 2 if there is no empty spot at the time of arrival at the destination station, thereby it is possible to obtain user's consent. In this case, the management server 20 may also inform the user a neighboring station 2 of the destination station.

### <Proposal of Near Station>

The management server 20 may also propose a near station if there is no empty spot at the time of reservation. For example, when the management server 20 receives the start-to-use request from the user terminal 13, if the number of empty spots set in the station information indicated by the station ID of the destination station set in the start-to-use request is not more than a predetermined number (e.g., 0), the management server 20 may propose to the user a near station 2 of the destination station (another station 2 corresponding to a location within a predetermined distance from the location indicated by the station information of the destination station). The management server 20 may also propose near stations with priorities depending on the number of empty spots and the distance from the destination station. For example, the management server 20 may transmit a list of station information sorted in the order of priorities to the user terminal 13, and the user terminal 13 may display the list. In addition, the management server 20 transmits the station information to the user terminal 13 with priorities, and at the user terminal 13, for example, the stations 2 can be displayed on the map so that a station with high priority is more noticeable on the screen shown in Fig. 6.

Here, the management server 20 may set the above-mentioned predetermined number as a number greater than 0, and propose a station 2 having more numbers of empty spots than the predetermined number among the near stations 2 of the destination station. If the predetermined number is greater than 0 and the number of empty spots at the destination station is greater than 0 and less than the predetermined number, the management server 20 may propose to the user to change the destination station to the near station 2 and alternatively provide a reward (e.g., discounting the usage fee, giving points, issuing coupons, etc.).

### <To Specify Destination Station After Start of Use>

When use of the bicycle 1 is started, the user may reserve without specifying the destination station, and before the use is finished (which may be before and after the user arrives at the destination station), the finish-to-use request transmitting unit 134 may transmit the finish-to-use request in which the destination station is specified. In this case, the management server 20 may include a finish-to-use determining unit that determines whether finishing the use is permitted depending on whether the destination station has any empty spot. If the finish-to-use determining unit determines that finishing the use is not permitted, it is possible to continue to charge the user even if the user leaves the bicycle 1 in the destination station.

### <Notification to Next User>

In addition, the management server 20 may notify other users after the use of the bicycle 1 has been finished. The management server 20 may notify other users when the current position received from the bicycle 1 falls within a predetermined distance from the destination station. In this case, the management server 20 may, for example, allow one of these other users to make a reservation when there is no vehicle body in the station 2 (departure station) from which the user with reservation is to use the bicycle 1 and store the reservation, and notify the user with the reservation at the station 2 at which the bicycle 1 which the use of is finished and is parked. In addition, a user who intends to finish the use of bicycle 1 may designate another user, such as a friend, so that another user can take over the bicycle 1 of which the use is finished.

### <Dynamic Pricing Based on Supply and Demand Forecasts>

In addition, the management server 20 may include a usage fee determining unit that forecasts the supply and demand of the bicycle 1 and determines the usage fee of the bicycle 1 in accordance with the forecast supply and demand.

The usage fee determining unit can determine the usage fee according to the amount of demand for bicycle 1 at the station 2. For example, for a bicycle 1 parked at a high-demand station 2 (having fewer parked bicycles 1), the usage fee may be set higher (a price per hour, a price per travelling distance, or fixed price) than for a bicycle parked at a different station 2. The demand can be expressed, for example, in how small number of bicycles 1 parked at the station 2. The usage fee determining unit may determine the usage fee at the station 2 as a departure station so that, for example, the fewer the bicycles 1 are parked, the more expensive the usage price becomes.

In addition, the usage fee determining unit may determine the usage fee according to the forecast demand. The usage rate determining unit may forecast future demand (usage) for each station 2 for a predetermined time (e.g., one hour, six hours, twelve hours, etc.) and determine the usage rate according to the forecast demand (e.g., the more the demand is, the higher the usage fee becomes). The forecasting of the demand can be based on, for example, past usage history. For example, the usage fee determining unit may create a predictive model to predict the number of bicycles 1 used at the station 2 based on explanatory variables such as the location of the station 2 (such as whether the station 2 is facing a road with not less than a predetermined width, whether the station 2 is located within a busy shopping district or a residential district, a distance from a station or bus stop, a distance from a fee-charging parking lot such as coin parking or the like, the number of residents within a predetermined distance therefrom, or day population / night population within a predetermined distance therefrom), the size of station 2 (such as the number of parking spots), season, time zone, a day of the week, weather, and the presence or absence of an event near station 2, and store the predictive model in the prediction model storage unit to forecast the amount of demand using the prediction model.

In addition, the usage fee determining unit can determine the usage fee according to supply quantity of the bicycles 1 at the station 2. For example, for a bicycle 1 parked at a high-supply station 2 (a station 2 with a large number of parked bicycles 1), the usage fee (hourly, per distance, or fixed) can be set lower than for a bicycle 1 parked at a different station 2.

In addition, the usage fee determining unit can predict the supply amount at each station 2 for a predetermined future period of time (e.g., one hour, six hours, twelve hours, etc.), and determine the usage fee according to the predicted supply amount (e.g., the higher the supply amount is, the lower the usage fee becomes). The supply amount can be estimated by estimating the number of reservations at the destination station, i.e., the number of bicycles to be parked at the destination station. Same as the departure station, the usage fee determining unit can create a predictive model that predicts the number of reservations in which the station 2 is the destination station based on explanatory variables such as the location and size of the station 2, season, time zone, a day of the week, weather, and the presence or absence of an event near the station 2 and predict the supply amount using such prediction model.

In addition, the usage fee determining unit may determine the usage fee in accordance with both the demand (or forecast demand) and the supply (or forecast supply).

### <Notification according to Supply and Demand Forecast Matching)>

In addition, in accordance with the supply and demand of the station 2, the management server 20 may notify the user that he/she is induced to use the bicycle 1.

For example, the management server 20 may include a notification unit that provides notification according to the supply and demand. The notification unit may inform the user of an alert about the possibility that use of the bicycle 1 of the station 2 will not be permitted if the demand increases, i.e., the number of bicycles parked at the station 2 falls below a predetermined number (or a predetermined percentage of the number of vehicles parked at the station 2). The target of the notification may be limited to the user terminal 13 having current position within a predetermined distance from the station 2.

Conversely, the notification unit may provide a notice to promote the use of the bicycle 1 at the station 2 so as to secure an empty spot when the supply volume increases, that is, when the number of bicycles parked at the station 2 exceeds a predetermined number (or a predetermined ratio to the number of vehicles that can be parked at the station 2). In this case, the notification unit may issue user terminals the notification with a reward, such as a discount (including free) or coupon, for example. The target of the notification may be limited to the user terminal 13 having current position within a predetermined distance from station 2.

Also, when there is no or few (not more than a predetermined number or a predetermined ratio) bicycle(s) parked at a near station 2 of the station 2 (within a predetermined distance from the location of the station 2) that is forecast to have increased supply, a notice may be given to propose the use of the station 2 in which the supply is increased or increased, to all or part of the user terminal 13 (e.g., only the user terminal 13 in which the application is running for reserving the bicycle 1) close to the near station 2 (within a predetermined distance from the neighbor station 2). In this case, the above-mentioned reward may be attached to the notification.

### <Presenting Route when Destination Station is Specified>

It is also possible to present a route to the destination station at the time of reserving the bicycle 1. The management server 20 may include a route presenting unit that presents a route from the departure station to the destination station. For example, the route presenting unit may acquire the station ID of the vehicle body information corresponding to the specified vehicle body ID in response to the start-to-use request, acquire the position of the station information corresponding to each of the acquired station ID (the station ID of the departure station) and the station ID corresponding to the station ID of the destination station specified in the start-to-use request, and present the travel route from the departure station to the destination station. For route search, for example, techniques used in known car navigation systems can be used. In this case, a road dedicated to automobiles, etc. can be excluded from the route, and in routing, a car cannot be operated, but a bicycle 1 can search for a route that includes a road that can be traveled.

### <Combination of Transport Means>

The route presenting unit may also present a route by combining multiple types of transport means. In this case, the route presenting unit may create routes by a combination of a variety of vehicles (e.g., electric assist bicycles, electric bicycles, electric scooters, electric assist scooters, electric kickboards, electric skateboards, electric assist skateboards, electric parallel motorcycles, etc.) as described above, as well as a combination of vehicles such as a car from carsharing, public transport such as taxis, trains, buses, and the like, as well as walking. In this case, the station 2 may include train stations, bus stops, taxi stations, and the like, and routing may be performed including moving between stations 2 on foot.

### <Analyze Parking Images>

The management server 20 may include a parking confirming unit that analyzes the parking image to ensure that the bicycle 1 is parked correctly. The parking confirming unit may analyze the parking image to determine if the bicycle 1 is properly parked in the parking spot at the station 2. For determining whether the bicycle 1 is parked correctly, a classifier can be created which has learned through machine learning, for example, a plurality of parking images captured under the correct parking condition, a plurality of parking images captured under the incorrect parking condition, and information indicating whether the parking is correctly done, and such classifier can be used. The parking confirming unit may notify the user terminal 13 of an alert if the bicycle 1 is not parked correctly. The parking confirming unit may not permit (continue to charge) to finish the use if the bicycle 1 is not parked correctly.

### <Emergency Stop>

In the present embodiment, it is assumed that the bicycle 1 is ridden off at a target station. For example, in the event of a failure on the bicycle 1, malfunction, or other emergency, it is permissible to ride off the vehicle at a station other than the target station. In this case, the user terminal 13 may transmit a request for an emergency stop (hereinafter referred to as an emergency stop request) to the management server 20. The user ID indicating the user and the vehicle body ID indicating the bicycle 1 may be set in the emergency stop request. The user ID may be omitted from the emergency stop request. In this case, the management server 20 may delete the station ID of the vehicle body information corresponding to the vehicle body ID set in the emergency stop request to be updated to, for example, information indicating the emergency stop.

The bicycle 1 which made an emergency stop may be retrieved by a service operator and delivered to any station 2. The management server 20 may also include a use inducement notifying unit that transmits a notice to induce the use of the bicycle 1 that made an emergency stop. For example, the use inducement notification unit may transmit a message to which the position of the vehicle body information (vehicle body information having the information indicating the emergency stop as the station ID) of the emergency stopped bicycle 1 is set, to the user terminal 13 that is located within a predetermined distance from the position of the vehicle body information. The use inducement notifying unit may give a user a reward for the use of the emergency stopped bicycle 1. For example, the use inducement notifying unit may provide value such as money, points, coupons, etc., and/or discount or free usage fee for the bicycle 1 pertaining to the move of the emergency stopped bicycle 1 to any station 2.

The management server 20 may not permit an emergency stop within a preset stop prohibited area. In this case, the management server 20 can include a stop prohibition area information storage unit for storing information indicating a stop prohibition area and an emergency stop determining unit for determining whether an emergency stop is permitted. For example, the emergency stop determining unit may determine whether the position of the vehicle body information corresponding to the vehicle body ID set in the received emergency stop request is within a predetermined stop prohibition area, and, if it is within the stop prohibition area, the emergency stop determining unit transmits an alert indicating that the vehicle body cannot be stopped, to the user terminal 13. In addition, if the emergency stop determining unit determines that the bicycle 1 cannot be stopped, the management server 20 may not permit finishing the use (i.e., charges will continue).

In addition, the use permission determining unit may transmit an alert for the bicycle 1 that is stopped within the stop-prohibited area for a specified period of time or longer. The use permission determining unit may transmit an alert to the user terminal 13 or inform the operator of the shared service. The use permission determining unit may, for example, monitor the position of the vehicle body information, detect a bicycle 1 which is within the stop-prohibited area and does not change its position for more than a predetermined period of time, and transmit an alert to a user using the bicycle 1 indicated by the detected vehicle body information. or a service operator.

In the event of an emergency stop, the management server 20 may require the user a parking image that captures the parking condition of the bicycle 1. The management server 20 may not permit finishing the use (continue to charge) for an emergency stop request in which no parking image is included. In addition, a parking image is provided to the operator of the service to let the operator determine whether or not the parking condition is appropriate, and, when the management server receives an input indicating that the parking condition is not appropriate from the operator (when the user is parked roughly or is parked in a way that interferes with other pedestrians or automobiles), the management server 20 may transmit a message to the user that the parking condition is bad, therefore apply charge a penalty, prevent the user from using the bicycle 1 for a certain period of time, and/or increase the usage fee.

As described above, it is assumed that the parking image at the end of normal use would be captured to enable determination that it is properly parked in the parking space within the station 2. However, in the event of an emergency stop, the management server 20 may instruct the user to capture an image in order to determine that the bicycle 1 is parked so that pedestrians or vehicles are not obstructed. In addition, the management server 20 may analyze the parking image to determine that the bicycle 1 is parked at the edge of the sidewalk (whether the parking is located near the boundary line between the roadway and the sidewalk, such as a guardrail, curbstone, or white line, or whether the longitudinal direction of the vehicle body is also substantially parallel to the boundary line) in order to prevent obstruction to pedestrians, cars, etc. If the bicycle 1 is not parked to prevent to be obstacle, the management server 20 may not permit finishing the use.

In addition, the management server 20 may instruct that, when an emergency stop is made, not only the parking space but also the background of the parked vehicle body be captured. The management server 20 may analyze the parking image to detect the vehicle body and determine that the background of the vehicle body has been captured (for example, the background has been captured at a predetermined ratio or more instead of the ground surface), and if it is determined that the background has not been sufficiently captured, the management server 20 may not permit finishing the use. In this case, the management server 20 may also analyze the parking image to determine whether other moving objects such as a pedestrian, a bicycle, a car, or the like are obstructed, such as whether a predetermined number or more of other moving objects are displayed.

In addition, the management server 20 may instruct the user to capture a mark such as a landmark in the vicinity of the emergency stop location in the event of the emergency stop. If the management server 20 may analyze the parking image and extract the mark from the parking image, the management server 20 may present the extracted mark to the administrator. As a result, it is possible to discover the vehicle body that has been emergency stopped by locating a landmark, etc., as well as the position information, so that the emergency stopped vehicle body may be easily retrieved.

The management server 20 may also make emergency stopped vehicles available to other users. The vehicle body of an emergency stopped vehicle may be made available to other users for a free usage fee or a discount fee. The management server 20 may also inform other users who are different from the user who made the vehicle make an emergency stop, of the position of the vehicle body which is emergency-stopped. The management server 20 may also transmit the position of the vehicle body which is emergency-stopped near the current position of another user in response to the access from such another user. The management server 20 can also provide the parking image to other users.

In the event of an emergency stop, the user may be charged an additional fee. This additional charge may be used, for example, as a cost for vehicle body retrieval. The management server 20 may set a timer for a user who made an emergency stop and may discount or waive the additional charge if another user uses the emergency stopped vehicle body within a predetermined period of time.

In addition, an area within which an emergency stop is not permitted (e.g., a roadway with a large number of passengers) may be set in advance, and the management server 20 may not permit (continue to charge) an emergency stop within the area.

### <Waiting for Cancellation>

In the present embodiment, when there is no spot available in the destination station, the reservation cannot be made, but it may be possible to let users wait for cancellation for the destination station. In this case, the management server 20 may include a cancellation waiting storage unit for storing a user waiting for cancellation for each station 2. When one user finishes use of the bicycle 1, the management server 20 may specify a user who is waiting for the cancellation corresponding to the station 2 where the ride-off takes place, and transmit a message to the user terminal 13 of the specified user, the message stating that the bicycle 1 is available. Alternatively, the management server 20 may automatically make a ride-off bicycle 1 available to a user waiting for the cancellation.

### <Pre-Fixed Fee>

In the present embodiment, the usage fee determining unit 214 determines the usage fee when the use of the bicycle 1 is finished, but the usage fee determining unit 214 may fix the usage fee when a reservation is made. For example, the usage fee determining unit 214 may acquire a route from the departure station to the destination station, acquire a distance of the acquired route, estimate the time for the arrival based on the acquired distance and the average speed of the bicycle 1, and determine fixed usage fee according to the estimated time. The route retrieval may, for example, use the method employed in the navigation system. The route acquisition may also be performed, for example, using the API provided by the map server providing the map service. The route-based distance calculation may be calculated, for example, based on the coordinates of the way points included in the route, or the route travelling distance may be acquired using the API provided by the mapping server.

In addition, the usage fee determining unit 214 may acquire information pertaining to the route, such as traffic congestion information and traffic control information, and change the fixed usage fee according to the obtained information.

In addition, when the estimated usage time is significantly exceeded (when the predetermined threshold value is exceeded), the usage fee determining unit 214 may cancel the fixed usage fee and determine the usage fee according to the actual usage time. In this case, when the fixed usage fee is calculated, an effective period of the fixed usage fee (after the predetermined time from the scheduled arrival time to the destination station) may be presented.

### <Effective Time for Securing Destination Station>

In the present embodiment, a reservation of the destination station is effective until the bicycle 1 arrives, but an expiration period may be set. For example, an expiration period for the reservation of the destination station may be set as a predetermined time (e.g., 1 hour, 2 hours, etc.) from the reservation time. In this case, when the expiration period passes, the management server 20 may notify the user terminal 13 that the expiration period has passed. In addition, the management server 20 may allow a user reserve the destination station again when the expiration period passes. If the reservation cannot be made, the management server 20 may instruct the user to set an available station 2 as the destination station.

### <Vacant Notification of the Destination Station>

In addition, the management server 20 may include a vacant notifying unit that notifies that a station 2 becomes vacant. The vacant notification unit may, for example, notify accordingly at the timing of a station 2 being vacant in response to the request in which the station 2 is specified from the user terminal 13.

### <Second Embodiment>

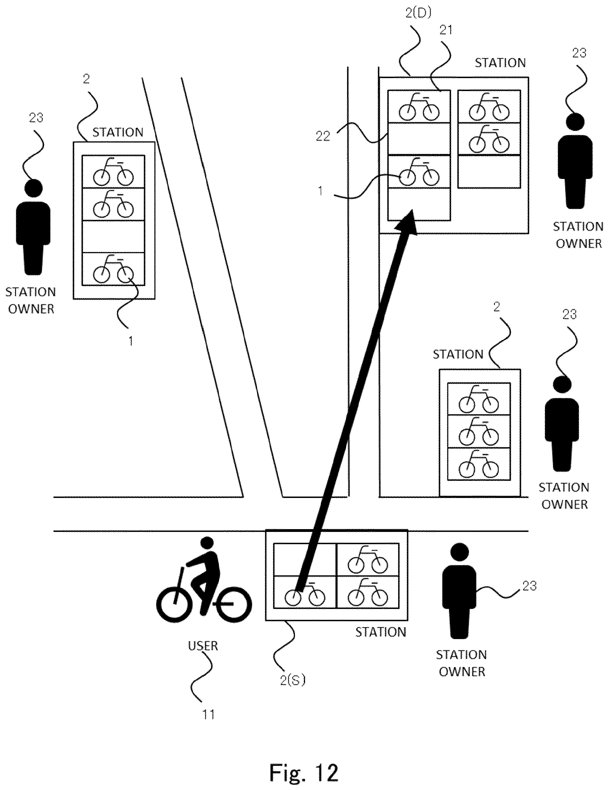

Hereinafter, an operation support system for a vehicle sharing service according to another embodiment of the present invention will be described. While in the present embodiment, a motorized bicycle sharing service (including rental service) is assumed, it can be applied to shared service of any vehicle. Fig. 12 is a diagram illustrating a bicycle sharing service according to the present embodiment. Bicycles 1 are parked at stations 2 located in various places. In the present embodiment, the station 2 means a place where bicycle 1 can be parked (stored). Up to a predetermined number of bicycles per station may be parked at each station 2. At least one of in-use spot 21 and empty spot 22 may be present on each station 2. The user 11 of the bicycle sharing service can travel from the departure station 2(S) to the destination station 2(D) by bicycle 1. The user 11 specifies the destination station 2(D) prior to use of bicycle 1. If empty spot 22 exists at the destination station 2(D), the use of bicycle 1 is permitted, and the bicycle 1 is automatically unlocked and can be used by the user 11.

The user 11 pays a usage fee according to the time spent with respect to the bicycle 1. In the operation support system of the present embodiment, a portion of the usage fee paid by the user is distributed to a station owner 23 that manages the station 2. In the present embodiment, the distribution of the usage fee is to be made to both the owner 23 of the departure station 2(S) and the owner 23 of the destination station 2(D) but may only be directed to either one. The return (profit share) of the portion of the usage fee to the station owner 23 motivates the station owner 23 to install a station 2, to perform maintenance, etc. so as to improve the experience of using the station 2.

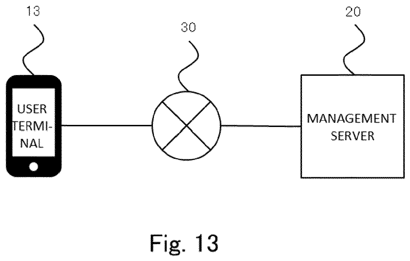

Fig. 13 is a diagram illustrating a configuration example of the operation support system according to the present embodiment. The operation support system of the present embodiment includes the management server 20. The management server 20 may be communicatively connected to the user terminal 13 operated by the user 11 via the communication network 3. The communication network 3 is, for example, the Internet and may be constructed by a public telephone network, a cellular telephone network, a wireless communication line, an Ethernet (registered trademark), or the like.

The user terminal 13 may be, for example, a computer such as a smartphone, tablet computer, cell phone terminal, personal computer, or the like. When a user 11 is to use bicycle 1, the user 11 may apply for use thereof and set the destination station 2(D) using the user terminal 13.

### <Management Server>

The management server 2 may be a general-purpose computer, such as a workstation or personal computer, or may be logically implemented by cloud computing.

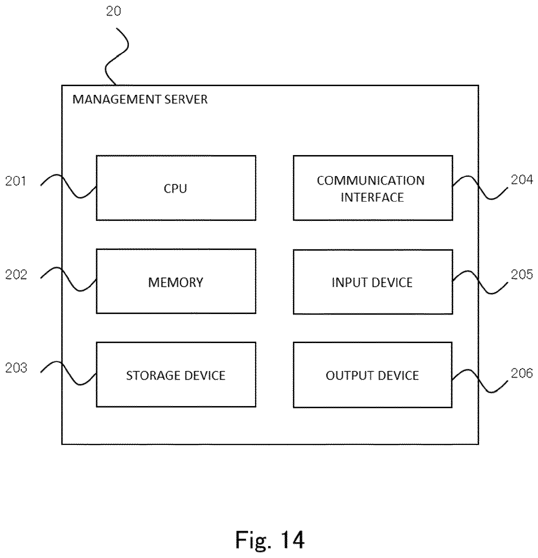

Fig. 14 is a diagram illustrating an example of a hardware configuration of the management server 2. The illustrated configuration is exemplary and may have other configurations. The management server 2 includes a CPU 201, a memory 202, a storage device 203, a communication interface 204, an input device 205, and an output device 206. The storage device 203 may be, for example, a hard disk drive, a solid-state drive, a flash memory, or the like, for storing various types of data or programs. The communication interface 204 is an interface for connecting to the communication network 3, such as an adapter for connecting to an Ethernet (registered trademark), a modem for connecting to a public telephone network, a wireless communication device for performing wireless communication, a USB (Universal Serial Bus) connector for serial communication, or an RS232C connector. The input device 205 may be, for example, a keyboard or mouse, a touch panel, a button, a microphone, or the like, for inputting data. The output device 206 may be, for example, a display, a printer, a speaker, or the like, for outputting data.

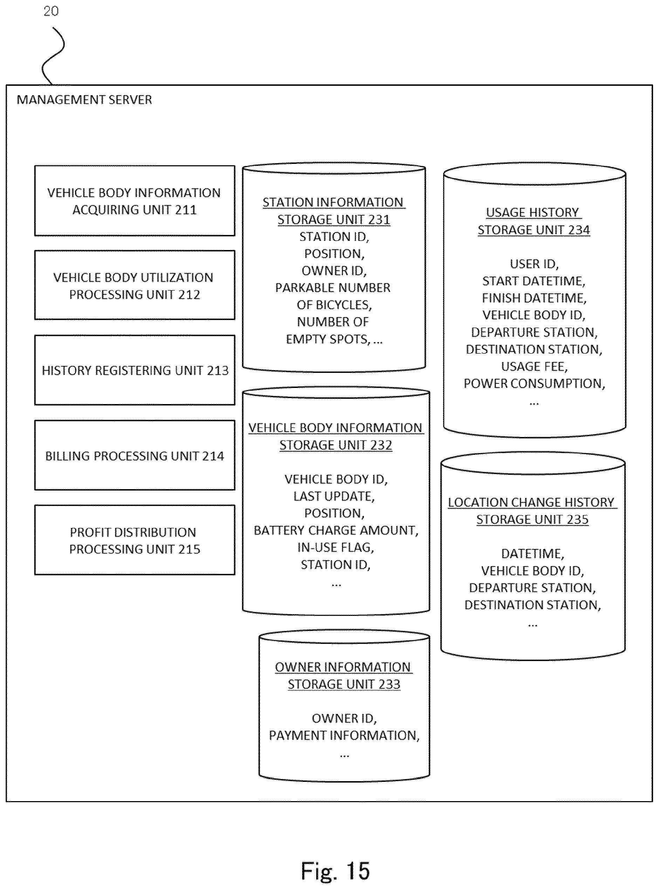

Fig. 15 is a diagram illustrating an example of a software configuration of the management server 3. The management server 20 includes a vehicle body information acquiring unit 211, a vehicle body use processing unit 212, a history registering unit 213, a billing processing unit 214, a profit distribution processing unit 215, a station information storage unit 231, a vehicle body information storage unit 232, an owner information storage unit 233, a usage history storage unit 234, and a location change history storage unit 235.

The station information storage unit 231 stores information pertaining to the station 2 (hereinafter referred to as station information). The station information includes the position of the station 2 (which may be represented in latitude and longitude of the representative position), the owner ID identifying the station owner 23, the number of bicycles that can be parked at station 2 (maximum number of vehicles that can be parked), and the number of available spots (number of empty spots) corresponding to the station ID identifying station 2.

The vehicle body information storage unit 232 stores information related to the bicycle 1 (hereinafter referred to as vehicle body information). In the vehicle body information, date and time of the last update of the vehicle body information, a position of the bicycle 1, charge amount of the battery provided to the bicycle 1, an in-use flag indicating whether or not the bicycle 1 is currently in use (as of the last update date and time), and a station ID indicating the station 2 at which the bicycle 1 is parked (the NULL value may be set if the bicycle is in use) are included so as to associate with the vehicle body ID identifying the bicycle 1.

The owner information storage unit 233 stores information related to the station owner 23 (hereinafter referred to as owner information). The owner Information includes payment information so as to associate with the owner ID indicating the station owner 23. The payment information includes, for example, information used for paying the distribution of usage fees to the station owner 23, such as the number of the bank account to which the remittance is to be made.

The usage history storage unit 234 stores the usage history of the bicycle 1. In the usage history, a user ID representing the user 11 using the bicycle 1, start date and time of the use, finish date and time of the use, a vehicle body ID indicating the used bicycle 1, a station ID indicating the departure station 2(S), a station ID indicating the destination station 2(D), the usage fee, and power consumption.

The location change history storage unit 235 stores the history of location change of the bicycle 1 (hereinafter referred to as a location change history). The location change of the bicycle 1, for example, refers to moving the bicycle 1 from a station 2 with no empty spot 22 to a station 2 with more empty spot 22. Location change of bicycles 1 takes place on regular basis so that the number of bicycles 1 parked at the stations 2 are well-balanced inbetween. The location change history storage unit 235 stores the history of such location change. In the location change history, date and time of the location change, a vehicle body ID indicating a location-changed bicycle 1, a station ID indicating the station 2 (departure station) before the location change, and the station ID indicating the station 2 (destination station) after the location change.

The vehicle body information acquiring unit 211 acquires vehicle body information. After the vehicle body information acquiring unit 211 first receives an input of the vehicle body information and registers it in the vehicle body information storage unit 232, the vehicle body information acquiring unit 211 may acquire only the position of the bicycle 1 and the battery charge amount to update the vehicle body information. For example, the bicycle 1 may be provided with a communication device having a function to acquire the position of the bicycle 1 by GPS, a function to acquire the remaining amount of the battery, and a communication function. The vehicle body information acquiring unit 211 may communicate with the communication device to acquire the position of the bicycle 1 and the battery charge amount. In addition, the vehicle body information acquiring unit 211 may request the user terminal 13 to acquire the position of the bicycle 1 and the battery charge amount from the user terminal 13. In this case, the user terminal 13 may, for example, acquire the position and the battery charge amount from the communication device provided to the bicycle 1, acquire the battery charge amount from the communication device provided to the bicycle 1, acquire the position of the user terminal 13 as the position of the bicycle 1 for the GPS function provided in the user terminal 13, or receive an input of battery charge amount from the user 11. The user terminal 13 may, for example, use a camera to capture the display of the bicycle 1 showing battery charge amount and read the battery charge amount from the captured image. The vehicle body information acquiring unit 211 can acquire vehicle body information periodically. The vehicle body information acquiring unit 211 can communicate with the communication device of the bicycle 1 at any time, such as every 1 minute, every 5 minutes, every 10 minutes, etc., to acquire the position and battery charge amount. In addition, the vehicle body information acquiring unit 211 can passively receive the position and the charge amount being transmitted from the bicycle 1.

The vehicle body use processing unit 212 performs processing pertaining to the start and finish of use of the bicycle 1.

When the use of the bicycle 1 is started, the vehicle body use processing unit 212 receives a start-to-use request from the user terminal 13. In the start-to-use request, a user ID indicating the user, a vehicle body ID indicating the bicycle 1 to be used, and a station ID indicating the destination station 2(D) are set. If the in-use flag in the vehicle body information corresponding to the vehicle body ID included in the start-to-use request is false, and the number of empty spots in the station information corresponding to the station ID (destination station) is not 0, the vehicle body use processing unit 212 may permit the use. Thereby, the vehicle body use processing unit 212 may decrement the number of empty spots in this station information, increment the number of empty spots in the station information corresponding to the station ID in the vehicle body information, and update the in-use flag to true in the vehicle body information. The vehicle body use processing unit 212 may store in the memory 202 or the storage device 203 the date and time of the start of use, the station ID and the battery charge amount in the vehicle body information, and the station ID indicating the destination station 2(D).

When the use of the bicycle 1 is finished, the vehicle body use processing unit 212 receives a finish-to-use request from the user terminal 13. In the finish-to-use request, the user ID, the vehicle body ID, and an image of the parked condition of the bicycle 1 at the destination station 2 are included. The vehicle body use processing unit 212 computes the distance between the position of the vehicle body information of the bicycle 1 and the position of the station information corresponding to the station ID of the destination station 2(D), and when the distance is within a predetermined threshold value, that is, when the position of the bicycle 1 is near the position of the destination station 2(D), the vehicle body use processing unit 212 may permit finishing of the use as the bicycle is located at the destination station 2(D). The vehicle body use processing unit 212 may update the in-use flag to false in the vehicle body information of the bicycle 1 of which the use is finished. The image may be used later to investigate how the bicycle 1 was used by the user 11.

The history registering unit 213 may register the usage history and the location change history.

The history registering unit 213 may register the usage history when the vehicle body use processing unit 212 receives the finish-use request. The history registering unit 213 determines the difference between the battery charge amount of the vehicle body information at the start of use and the current battery charge amount as the used amount of electricity, and the usage fee can be determined according to the usage time from the start of use to the present. The usage fee may be determined, for example, by multiplying a predetermined unit price per time by the time of use or may be determined by dynamic pricing, which can be different depending on the user 11. The history registering unit 213 can create the usage history to which the user ID, the start date and time, the current date and time (the finish date and time), the vehicle body ID, the station ID at the start of use, the station ID of the destination station, the usage fee, and the usage battery amount are set and registered in the usage history storage unit 234.

When the vehicle body information is updated, the history registering unit 213 may determine that the location change has taken place if the in-use flag in the vehicle body information is false and the position has been changed more than the predetermined value. In this case, the history registering unit 213 may monitor the change in the position of the vehicle body information, and when the change in the position being less than the predetermined value continues for the predetermined time (when the movement of the bicycle 1 stops), the history registering unit 213 may specify the station 2 closest to the position from the station information, and set the station ID of the specified station 2 to the station ID in the vehicle body information. The history registering unit 213 may create a location change history to which the current date and time, the vehicle body ID of the location-changed bicycle 1, the station ID prior to the update, and the station ID after the update are set, and register the location change history in the location change history storage unit 235.

The billing processing unit 214 performs processing to charge the user 11 the usage fee. The known method is used for the billing processing and the description will be omitted here.

The profit distribution processing unit 215 carries out processing related to the profit distribution to the station owner(s) 23. For example, the profit distribution processing unit 215 extracts the usage history for any predetermined period, such as one week or one month, assigns a predetermined percentage of the usage fee included in the usage history (5% in the present embodiment) to the station owner 23 of the departure station 2 (S), and also assigns a predetermined percentage of the usage fee included in the usage history (5% in the present embodiment) to the station owner 23 of the destination station 2(D). The profit distribution processing unit 215 may determine the amount of payment to the station owner 23 by totaling the amount assigned for each station owner 23. The profit distribution processing unit 215 performs the process of paying the determined amount of payment to the station owner 23 using a known method.

Note that the profit distribution processing unit 215 may, for example, distribute profits to only the station owner 23 of the departure station 2(S) or only the station owner 23 of the destination station 2(D). The profit distribution processing unit 215 may distribute different percentages of the usage fee to the station owners 23 of the departure station 2(S) and for the station owner 23 of the destination station 2(D).

In addition, the profit distribution processing unit 215 may increase or decrease the distribution amount to the station owner 23 according to battery consumption of the bicycle 1. If the battery consumption is higher, battery charge of the bicycle 1 takes a longer time and more operation costs are incurred. Therefore, the adjustment may be made according to the battery consumption for profit distribution. For example, the profit distribution processing unit 215 may add a predetermined amount or a predetermined percentage to the distribution amount for the station owner 23 of a station (which may be a departure station or a destination station) that has a small total amount of battery power used during a predetermined period (e.g., less than a predetermined amount from the average amount of total battery power used). The profit distribution processing unit 215 may add an amount corresponding to the used amount of battery power, only to the station owner 23 of the destination station.

The profit distribution processing unit 215 may also increase or decrease the distribution to the station owner 23 in accordance with the frequency of the location change or the distance of the location change of the bicycle 1. The frequent location change causes corresponding cost. For such station 2 with less cost or less travel distance, the addition may be made. The profit distribution processing unit 215 may, for example, for each station 2, count the number of the location change history to which this station 2 is set as the departure station or the destination station during a predetermined period of time, and when the counted number is less than a predetermined value (which may be a predetermined threshold value or a ratio to the total number, or may be an average or a median of the counted numbers for each station 2), and the profit distribution processing unit 215 may add predetermined monetary amount, an amount of predetermined percentage, an amount corresponding to the number, and an amount of percentage corresponding to the number, to the distributing amount. The profit distribution processing unit 215 may add an amount corresponding to the number of the location change history only to the station owner 23 of the destination station. In this case, the profit distribution processing unit 215 may perform the above-mentioned adding processing in accordance with the distance between the departure station and the destination station related to the location change history instead of the number of the location change history.

The profit distribution processing unit 215 may also increase or decrease the distribution amount to the station owner 23 according to the battery charge amount of the bicycles 1 parked at the station 2. Since higher battery charge amount of the bicycle 1 in a station 2 improves the usability of the user 11, it is expected that the distribution amount according to the battery charge amount motivates the station owner 23 to operate the station 2 with higher battery charge amount. The profit distribution processing unit 215 may, for example, calculate the total battery charge amount at the time of performing the distributing process for each station 2 and determine an additional distribution amount depending on the battery charge amount. The profit distribution processing unit 215 may, for example, add to the distribution amount a predetermined amount, an amount of predetermined percentage, an amount according to the number, and an amount of percentage according to the number when the total battery charge amount is equal to or more than a predetermined value (which may be a predetermined threshold value, a percentage of the total battery charge amount per station 2, or an average or median of the total battery charge amount per station 2, etc.). The profit distribution processing unit 215 may add an amount according to the battery charge amount only to the station owner 23 of the destination station.

### <Actions>

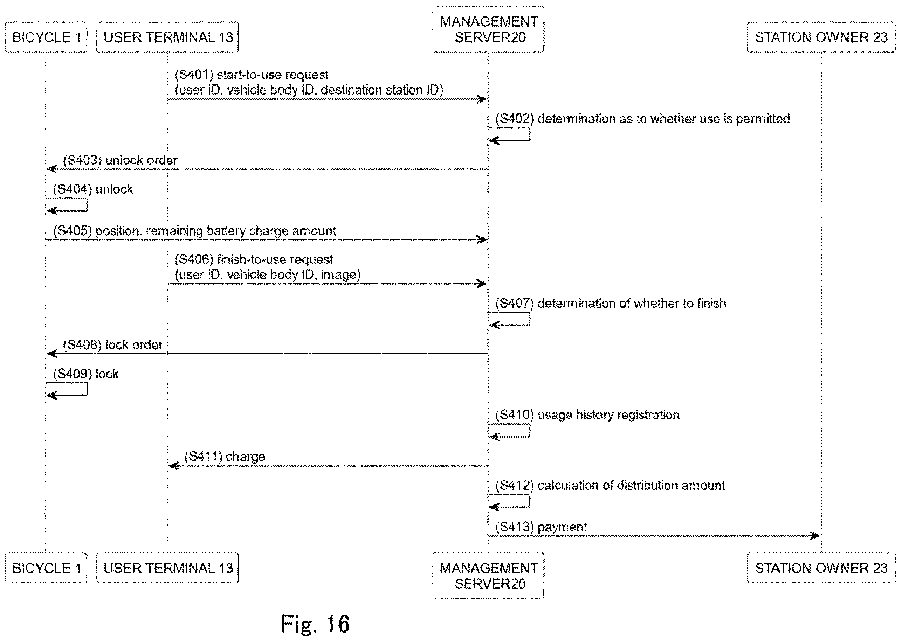

Fig. 16 is a diagram illustrating a flow of processing relating to profit distribution. A start-to-use request is transmitted from the user terminal 13 to the management server 20 (S401). In the start-to-use request, the user ID identifying the user 11, the vehicle body ID identifying the bicycle 1 that the user 11 desires to use, and the station ID indicating the destination station 2(D) to ride the bicycle 1 to. As described above, the management server 20 determines whether use of the bicycle 1 is permitted based on whether the bicycle 1 is not in use and the destination station 2 has an empty spot (S402). If use of the bicycle 1 is permitted, an unlock order is transmitted from the management server 20 to the bicycle 1 (S403) and the bicycle 1 is unlocked (S404). In this way, the user 11 can use the bicycle 1. During the use of the bicycle 1, the bicycle 1 periodically notifies the management server 20 of its position and remaining battery amount (S405).

When the use of the bicycle 1 is finished, a finish-to-use request is transmitted from the user terminal 13 to the management server 20 (S406). The finish-to-use request includes the user ID, the vehicle body ID, and the image that captures the parking condition of the bicycle 1. The management server 20 confirms that the bicycle 1 has arrived at the destination station 2 based on the position information and determines whether use of the bicycle 1 is permitted (S407). If finishing of the use is permitted, a lock order is transmitted from the management server 20 to the bicycle 1 (S408) and the bicycle 1 is locked (S409).

In the management server 20, the usage history is registered (S410) and the user is charged a usage fee according to the usage time (S411).

The management server 20 also calculates amount of the assignment to the station owner 23 according to the usage history (S412) and pays the calculated amount of the distribution to the station owner 23 (S413).

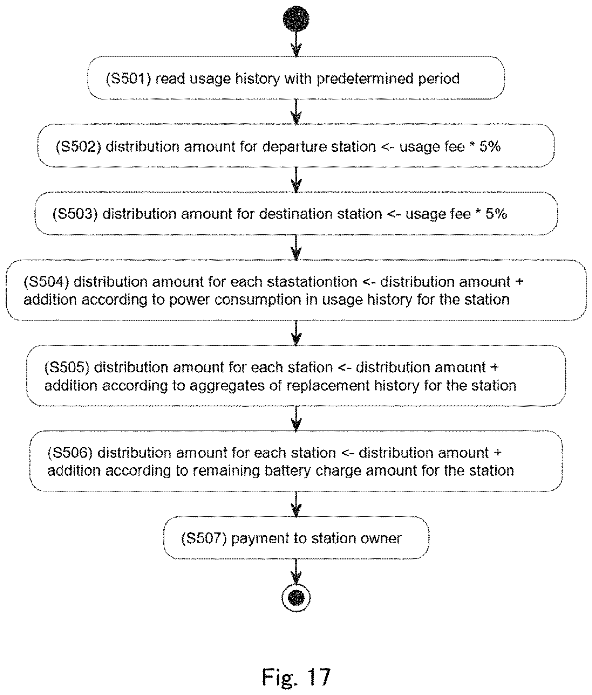

Fig. 17 is a diagram illustrating a process of calculating the distribution amount to the station owner 23.

The profit distribution processing unit 215 of the management server 20 reads the usage history for a predetermined period (e.g., for one month) from the usage history storage unit 234 (S501). The profit distribution processing unit 215 computes 5% of the usage fee as the distribution amount to the station owner 23 of the departure station (S502). Here, the profit distribution processing unit 215 may calculate the sum of the usage fee for each station ID of the departure stations for a predetermined period and calculate 5% thereof. Similarly, the profit distribution processing unit 215 may compute 5% of the usage fee as the amount assigned to the station owner 23 of the destination station (S503).

The profit distribution processing unit 215, for each station ID, sums up battery power consumptions of the usage history, and adds an amount according to the total of the battery power consumption to the distribution amount corresponding to the station ID (S504). In addition, the profit distribution processing unit 215 adds an amount corresponding to the aggregate amount of the location change history corresponding to the station ID (for example, a count of the number of location change history or an average of the distances from the departure station to the destination station) to the assigned amount corresponding to the station ID (S505). In addition, the profit distribution processing unit 215, for each station ID, calculates aggregate amount (e.g., total or average) of the battery charge amount of the vehicle body information corresponding to the station ID and adds the amount according to the aggregated amount to the assigned amount corresponding to the station ID (S506).

The profit distribution processing unit 215 performs the process of paying the distribution amount calculated as described above to the station owner 23 (S507).

As described above, a profit distribution according to the usage fee of the bicycle 1 can be made for the station owner 23 of the station 2 that stores the bicycle 1.

Although the present embodiment has been described above, the above-described embodiment is intended to facilitate the understanding of the present invention and is not intended to be a limiting interpretation of the present invention. The present invention may be modified and improved without departing from the spirit thereof, and the present invention also includes its equivalent.

For example, in the present embodiment, the destination station is set before the bicycle is used, but the bicycle may be used without setting the destination station. In this case, for example, the destination station is not set in the start-to-use request, and only the user ID and the vehicle body ID are set therein. The vehicle body use processing unit 212 may permit the use of the vehicle body when the in-use flag corresponding to the vehicle body ID is false. Also, for example, the scheduled usage time may be set instead of setting the destination station, and when the in-use flag is false and the usage time is less than or equal to a predetermined maximum value, the use may be permitted.

In the present embodiment, it is assumed that the profit distribution amount to the station owner 23 is calculated by multiplying the usage fee by the ratio of 5%. However, the ratio can be any, such as 1%, 3%, and 10%. It may also be a different percentage between the owner of the departure station and the owner of the destination station. Alternatively, different ratio may be set different depending on time zone, or set according to an attribute of the station owner (e.g., whether it is a natural person or a corporate, the number of days since he/she became an owner, the number of owned stations, the number of bicycles that can be parked on a station, etc.). The profit distribution amount to the station owner 23 may also be an amount that is dynamically determined by a factor other than a fixed amount or a usage fee, rather than a percentage of the usage fee.

### <Third Embodiment>

Hereinafter, an operation support system for a vehicle sharing service according to another embodiment of the present invention will be described. In the present embodiment, a shared service (including a rental service) of a motorized bicycle (an electric assisted bicycle) is assumed. The operation support system of the present embodiment can be applied to the shared service of any vehicle.

For example, a vehicle may include a single-seat vehicle (personal mobility) in its entirety. For example, the vehicle may be a one-person personal mobility with an electric motor. The vehicle may be a bicycle, scooter, skateboard, or the like which is capable of switching between an electric (automatic) and an electric assist. The vehicle may be one that generally does not require to secure parking lot. The vehicle may include, for example, a bicycle, a scooter (also referred to as a kickboard, a kick skater), a skateboard, a parallel motorcycle, an inverted motorcycle (such as Segway), a self-sustaining, a stable monocycle, and the like. The vehicle may also include a motorized bicycle and a motorcycle. The vehicle may include one set at a maximum speed of less than 30 km/h (e.g., a bicycle with motor), one with a maximum speed of less than 24 km/h (e.g., an electric assisted bicycle), and one with a maximum speed of less than 20 km/h (e.g., supposed to be an electric kickboard).

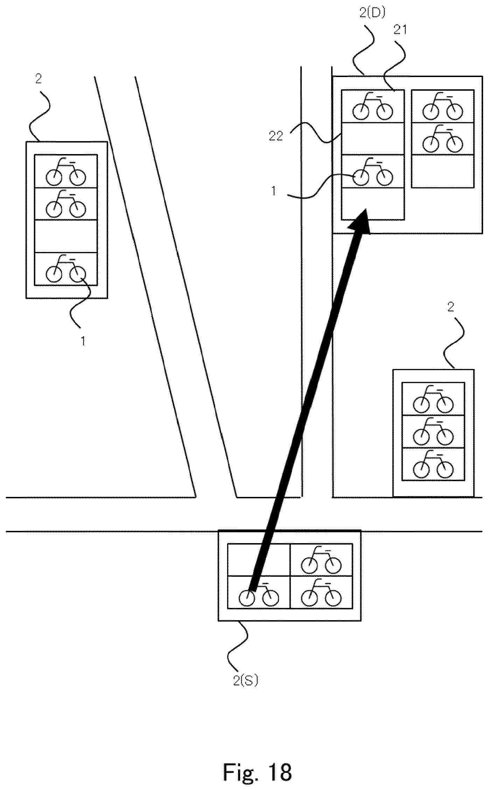

Fig. 18 is a diagram illustrating a bicycle sharing service according to the present embodiment. The bicycles 1 are parked at stations 2 located in various places. In the present embodiment, the station 2 means a location at which bicycle 1 can be parked. Up to a predetermined number of bicycles may be parked at the station 2. That is, at least one of in-use spot 21 and empty spot 22 may be present on each station 2. When a user of the bicycle sharing service travels from the departure station 2(S) to the destination station 2(D) on bicycle 1, the user of the sharing service designates the destination station 2(D) before using bicycle 1. If the destination station 2(D) has an empty spot 22, the use of the bicycle 1 is permitted, and the bicycle 1 is automatically unlocked and made available to the user.

In the shared service of the present embodiment, the battery of a bicycle is exchanged in the form of the so-called crowdsourcing. That is, the replacement battery is in advance distributed to a replacer who replaces the battery, the replacer charges the batteries at his/her home, etc., and when the replacer replaces the battery of the bicycle parked at the station 2, the replacer is rewarded. The reward for the replacer is determined by remaining battery level of the bicycle that has been replaced. For example, higher reward may be given to a replacer when a battery of a bicycle with lower battery level is replaced.

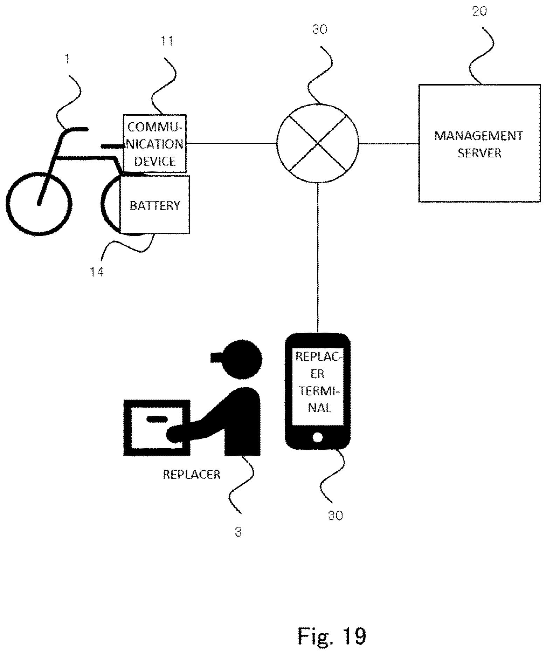

Fig. 19 is a diagram illustrating an example of the overall configuration of the operation support system according to the present embodiment. The operation support system of the present embodiment includes a management server 20. The management server 20 is communicatively connected through a communication network 30 with each of communication device 11 provided to the bicycle 1 and a replacer terminal 30 of a replacer 3. The communication network 30 is, for example, the Internet and may be constructed by a public telephone network, a cellular telephone network, a wireless communication line, an Ethernet (registered trademark), or the like. The replacer terminal 30 may be, for example, a computer such as a smartphone, tablet computer, or personal computer. The management server 20 may be a general-purpose computer, such as a workstation or personal computer, or may be logically implemented by cloud computing.

The communication device 11 of the bicycle notifies the management server 20 of a position of the bicycle 1 and a remaining battery charge amount. The management server 20 may send a message to the replacer terminal 30 to replace a battery 14 of the bicycle 1 if there is a bicycle 1 that requires charging (e.g., a bicycle 1 with a battery level of less than a predetermined amount). The replacer 3 may replace the battery accordingly. In this case, the replacer 3 may replace the battery 14 of a bicycle 1 which is parked at station 2 in addition to the bicycle 1 corresponding to the notification. The replacer 3 can access the management server 20 by the replacer terminal 30 to check the remaining charge battery level of the bicycle 1 that is parked at the station 2.

### <Computer>

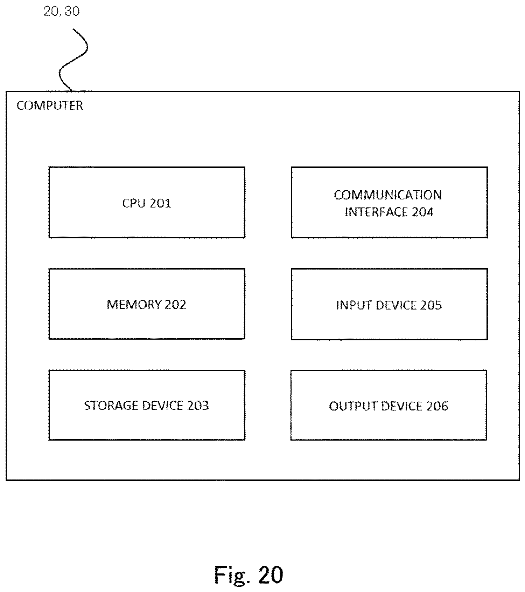

FIG. 20 is a diagram illustrating an example of a hardware configuration of a computer used for the management server 20 and the replacer terminal 30. The illustrated configuration is exemplary and may have other configurations. The computer includes a CPU 201, a memory 202, a storage device 203, a communication interface 204, an input device 205, and an output device 206. The storage device 203 may be, for example, a hard disk drive, a solid-state drive, a flash memory, or the like, for storing various types of data or programs. The communication interface 204 is an interface for connecting to the communication network 3, such as an adapter for connecting to an Ethernet (registered trademark), a modem for connecting to a public telephone network, a wireless communication device for performing wireless communication, a USB (Universal Serial Bus) connector for serial communication, or an RS232C connector. The input device 205 may be, for example, a keyboard or mouse, a touch panel, a button, a microphone, or the like, for inputting data. The output device 206 may be, for example, a display, a printer, a speaker, or the like, for outputting data.

### <Function Configuration>

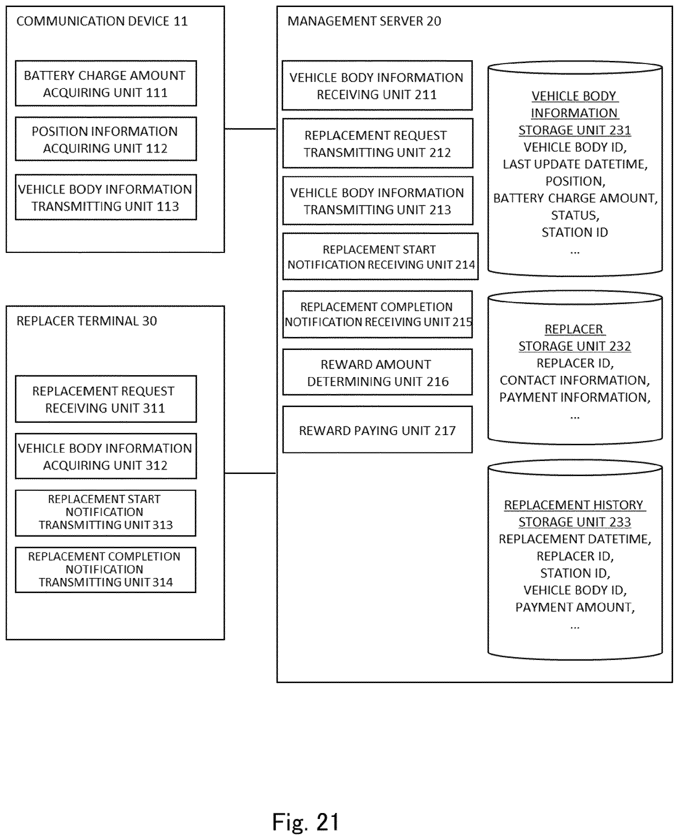

FIG. 21 is a diagram illustrating a functional configuration of the communication device 11, the management server 20, and the replacer terminal 30.

### == Communication Device 11 ==

The communication device 11 comprises a battery charge amount acquiring unit 111, a position information acquiring unit 112, and a vehicle body information transmitting unit 113. Each of these functional sections may be implemented by logic circuitry or may be implemented by a general-purpose processor executing a program.

The battery charge amount acquiring unit 111 acquires the battery charge amount (remaining amount of battery 14 provided to the bicycle 1) of the bicycle 1. The battery charge amount acquiring unit 111 can calculate the remaining capacity of the battery 14 by a general method, and a detailed explanation thereof will be omitted.

The position information acquiring unit 112 may, for example, acquire the position of the bicycle 1 based on the GPS signal received via a GPS (Global Positioning System) receiver (may be provided by the communication device 11 or may be obtained from an external sensor).

The vehicle body information transmitting unit 113 transmits information related to the bicycle 1 (hereinafter referred to as vehicle body information) to the management server 20. The vehicle body information can include a vehicle body ID indicating the bicycle 1, a battery charge amount (remaining amount of the battery 14) acquired by the battery charge amount acquiring unit 111, and position information acquired by the position information acquiring unit 112. The vehicle body information transmitting unit 113 may transmit the vehicle body information to the management server 20 via the communication network 30 according to, for example, a standard such as Wi-Fi or LTE (Long Term Evolution). The vehicle body information transmitting unit 113 may transmit the vehicle body information to the management server 20 periodically (e.g., every arbitrary set time such as 5 minutes, 10 minutes, 1 hour, 3 hours, etc.). The transmission interval may be changed according to the battery charge amount and the position information. In this case, depending on the timing of transmission, the vehicle body information may only include either the battery charge amount or the position information. The vehicle body information transmitting unit 113 may transmit the vehicle body information at any time regardless of the transmission interval, for example, when the battery charge amount falls below a predetermined threshold value or when change amount of the position information (i.e., the travel distance of the bicycle 1) exceeds a predetermined threshold value.

### == Management Server 20 ==

The management server 20 comprises a vehicle body information receiving unit 211, a replacement request transmitting unit 212, a vehicle body information transmitting unit 213, a replacement start notification receiving unit 214, a replacement completion notification receiving unit 215, a reward amount determining unit 216, a reward paying unit 217, a vehicle body information storage unit 231, a replacer storage unit 232, and a replacement history storage unit 233.

The vehicle body information storage unit 231 stores the vehicle body information. In the vehicle body information stored by the vehicle body information storage unit 231, a vehicle body ID identifying the bicycle 1, last update date and time of the vehicle body information, a position of the bicycle 1, battery charge amount, a status, and a station ID, etc. are included. The vehicle body ID, position, and battery charge amount may be included in the vehicle body information transmitted from the bicycle 1. The status includes that the bicycle 1 is in-use, that the bicycle 1 is available, and that the bicycle 1 is in battery replacement, and the like. The management server 20 may update the status into in-use when the bicycle 1 is in use, and may update the status into available upon finishing the use of the bicycle 1. The station ID is information identifying the station 2 which bicycle 1 is located at.

The replacer storage unit 232 stores information related to the replacer 3 (hereinafter referred to as replacer information). The replacer information includes contact information and payment information of the replacer 3 corresponding to a replacer ID identifying the replacer 3. The contact may be, for example, an e-mail address, an ID of the replacer 3 for push notification to the replacer terminal 30, a telephone number, an ID of the replacer 3 in a social network, and so forth. The payment information is, for example, information for paying reward to the replacer 3, such as a bank account number.

The replacement history storage unit 233 stores information pertaining to the replacement of the battery 14 (hereinafter referred to as a replacement history). The replacement history includes date and time when the battery 14 was replaced, a replacer ID identifying the replacer 3 who has replaced the battery 14, a station ID indicating the station 2 at which the bicycle 1 of the replaced battery 14 was parked, a vehicle body ID identifying the bicycle 1 of the replaced battery 14, and reward amount (the amount paid) for replacing the battery 14.

The vehicle body information receiving unit 211 receives vehicle body information from the bicycle 1. The vehicle body information receiving unit 211 registers the received vehicle body information in the vehicle body information storage unit 231. The vehicle body information receiving unit 211 can update the vehicle body information stored in the vehicle body information storage unit 231 based on the received vehicle body information. In addition, the vehicle body information receiving unit 211 may set the date and time when the vehicle body information is received or the date and time when the vehicle body information storage unit 231 is updated, as a final update date and time in the vehicle body information. For example, the vehicle body information receiving unit 211 may specify the nearest station 2 based on the position information and set the station ID, for the bicycle 1 for which the status is available.

The replacement request transmitting unit 212 transmits a message requesting the replacer 3 to replace the battery 14 (hereinafter referred to as a replacement request) to the replacer terminal 30. For example, when the battery charge amount of the vehicle body information updated in the vehicle body information storage unit 231 is below a predetermined threshold value, the replacement request transmitting unit 212 may transmit a replacement request requesting the replacer terminal 30 to replace the battery 14 of the bicycle 1 related to the vehicle body information. The replacement request may include the vehicle body information of the target. The replacement request may also include a portion of the vehicle body information (e.g., only the remaining battery charge amount).

The replacement request may be sent to all or part of the replacers 3. For example, the replacement request transmitting unit 212 may transmit a replacement request to a replacer 3 who is currently within a predetermined distance from the position where the bicycle 1 (the bicycle 1 whose battery charge amount is less than or equal to the threshold value) to be charged is parked (the position of the station 2). Further, the replacement request transmitting unit 212 may, for example, transmit a replacement request to a replacer 3 having an address within a predetermined distance from the position where the bicycle 1 to be charged is parked.

The vehicle body information transmitting unit 213 transmits the vehicle body information in response to a request from the replacer terminal 30. For example, the vehicle body information transmitting unit 213 may, in response to a request to which a station ID is specified, respond the vehicle body information corresponding to the specified station ID. The vehicle body information transmitting unit 213 may also include in the response, the total amount of reward for replacing the battery 14 of the bicycle 1 as determined by the reward amount determining unit 216, which will be described later, for each station 2.

The replacement start notification receiving unit 214 receives a notification from the replacer terminal 30 that the battery 14 is to be replaced (hereinafter referred to as a replacement start notification). The vehicle body ID is specified in the replacement start notification. The replacement start notification receiving unit 214 can, in response to the replacement start notification, set the status of the vehicle body information corresponding to the specified vehicle body ID, in battery replacement. When the status of the vehicle body information corresponding to the vehicle body ID included in the replacement start notification is in use or in battery replacement, the replacement start notification receiving unit 214 may also, as the battery cannot be replaced, respond accordingly. That is, the replacement start notification receiving unit 214 may allow the replacer 3 to replace the battery 14 of the bicycle 1 on a first-come-first-served basis. When a plurality of vehicle body IDs are set in the replacement start notification, the replacement start notification receiving unit 214 can change the status and determine whether replacement of the battery is permitted, for each vehicle body ID.

The replacement completion notification receiving unit 215 receives a notification of completion of replacement of the battery 14 from the replacer terminal 30 (hereinafter referred to as a replacement completion notification). The vehicle body ID is specified in the replacement completion notification. The replacement completion notification receiving unit 215 may, in response to the replacement completion notification, set the status of the vehicle body information corresponding to the specified vehicle body ID, to available. The replacement completion notification receiving unit 215 also updates the battery charge amount of the vehicle body information corresponding to the vehicle body ID. The replacement completion notification receiving unit 215 may, for example, transmit to the communication unit 11, a request for acquiring the battery charge amount to acquire the battery charge amount.

The reward amount determining unit 216 determines an reward amount for the replacer 3. The reward amount determining unit 216 may determine the reward amount according to the remaining battery charge amount of the replaced battery 14 (the value set to the battery charge amount of the vehicle body information). The reward amount determining unit 216 can determine the reward amount according to a difference between a capacity of the battery 14 of fully charged amount and the battery charge amount set in the vehicle body information prior to the replacement (hereinafter referred to as a required battery charge amount), that is, the battery amount to be charged by the replacer 3 to the battery 14.

The determination of the reward amount for the replacement of the battery 14 may be, for example, computed by multiplying a uniform unit price by a required battery charge amount, or may be computed by multiplying the battery charge amount by a unit price of power determined according to the season, time zone, etc.

### === Dynamic Pricing according to Attribute ===

In addition, the reward amount determining unit 216 may determine a different reward amount according to an attribute of the replacer 3. The reward amount determining unit 216 may, for example, calculate the reward amount by multiplying a unit price corresponding to the attribute of the replacer 3 by the required battery charge amount, or may add (or subtract) a premium corresponding to the attribute of the replacer 3 to the amount of the reward uniformly calculated based on a predetermined unit price. In addition, the amount of reward may be determined according to a combination of the attribute of the replacer 3 with another condition.

The attribute of the replacer 3 may include a marketing attribute such as, for example, a demographic attribute. An attribute of the replacer 3 may also employ the frequency of replacement of the battery 14 and charged power amount (the sum of the charge requirements of each of the replaced batteries 14) during a predetermined period of time in the past. The reward amount determining section 216 may, for example, determine a higher reward amount for a replacer 3 who has achieved a higher replacement performance (frequency). The reward amount determination unit 216 may also determine higher reward amount for a replacer 3 of less frequent replacement in order to encourage the entry of new replacers 3.

The reward amount determining unit 216 may also determine the reward amount according to the address or current position of the replacer 3. For example, the reward amount determining unit 216 may determine the reward amount so that farther replacer 3's address or current position is from the position of the bicycle 1 to be charged (or the position of the station 2 where the bicycle 1 is parked), higher the reward amount is given.

The reward amount determining unit 216 may determine the reward amount according to the remaining battery charge amount. For example, the reward amount determining unit 216 may determine the reward amount so as to increase the reward in order to lead more replacers 3 to replacing the batteries, depending on the remaining battery charge amount of the bicycle 1 or the total remaining battery charge amount of all or part of the bicycles 1 parked at the station 2 (lesser the battery charge amount is left).

In addition, the reward amount determining unit 216 may determine the reward amount according to the number of bicycles 1. The reward amount determination unit 216 may determine the reward amount such that the reward amount becomes higher according to, for example, the number (the smaller number) of bicycles 1 parked at the station 2 or the number (the larger number) of empty spots.

The reward amount determining unit 216 may also determine the reward amount according to a vehicle the replacer 3 is using. For example, the reward amount determining unit 216 may identify the vehicle the replacer 3 is using and determine the reward amount according to the vehicle. For example, the management server 20 may periodically obtain the current position of the replacer 3 to identify a travel speed of the replacer 3 in a predetermined period and to identify a travelling means (vehicle) based on the travel speed (which may be an average value or a maximum value). The reward amount determining unit 216 may determine a higher reward for the replacer 3 using a vehicle that travels faster or may determine a higher reward for the replacer 3 using a slower vehicle.

In addition, the reward amount determining unit 216 may determine the reward amount according to business hours of the replacer 3, for example, if the replacer 3 is a business company. The management server 20 stores business hours for each replacer 3, and the reward amount determining unit 216 may determine a higher reward for outside business hours.

The reward amount determining unit 216 may also determine the reward amount according to whether a replacing battery was charged by the replacer 3 (e.g., the replacer 3 has brought it home and had it charged). The reward amount determining unit 216 may determine that if the replacer 3 did the charging, the reward amount is higher than if the replacer 3 did not.

### === Dynamic Pricing according to Location ===

The reward amount determining unit 216 may also determine a different reward amount depending on a location of the station 2 where the bicycle 1 of the replaced battery 14 is parked. For example, the reward amount determining unit 216 may determine a different unit price or premium depending on a distance from a station, commercial facility, or the like. For example, the reward amount determining unit 216 may determine the unit price or premium depending on an aggregate value (e.g., average value) of the time (i.e., the degree to which the replacer 3 can be readily procured) between the issuance of the replacement request and the issuance of the replacement start notification.

The reward amount determining unit 216 may determine the reward amount according to a location of the station 2. The reward amount determining unit 216 may determine the reward amount so that, for example, according to the station 2 at which the bicycle 1 of the replaced battery 14 is parked faces a broad road (the width is greater than a predetermined value), for example, the reward amount for the bicycle 1 parked at the station 2 facing a broad road is higher than the reward amount for the bicycle 1 parked at the station 2 not facing a broad road.

The reward amount determination unit 216 may also determine the reward amount according to the number of other bicycles 1 in the vicinity of the bicycle 1 of the replaced battery 14. For example, the reward amount determining unit 216 may determine the reward amount according to the number of other bicycles 1 parked at the station 2, at which the bicycle of the replaced battery 14 is parked, for example, the smaller the number is, the higher the reward price becomes. For example, the reward amount determining unit 216 may determine the reward amount depending on the number of bicycles 1 parked at a station 2 (another station within a predetermined distance from the station 2) in the vicinity of the station 2 in which the bicycle 1 of the replaced battery is parked, for example, the smaller the number is, the higher the reward amount becomes.

### == Dynamic Pricing according to Time Period ==

In addition, the reward amount determining unit 216 may determine the reward amount according to a time factor such as date, day of the week, time zone or the like. For example, the reward amount determining unit 216 may determine the reward amount so that the reward as to Saturday, Sunday, or public holiday is higher than the reward as to the other days. The reward amount determining unit 216 may also determine the reward amount according to a combination of day of the week and time zone, for example, so that the reward amount as to a night of Friday is higher than the reward as to the other days of the week or the other time zone. The reward amount determining unit 216 may also determine the reward amount according to a season, for example, so that the reward amount as to winter is higher than that as to the other seasons.

### == Dynamic Pricing according to Usage History of App ==

The reward amount determining unit 216 may determine the reward amount according to a usage history of a software (for example, an App executing on a smartphone; hereinafter simply referred to as App) used for the sharing service. For example, the reward amount may be determined depending on whether a replacer has launched the App in a replacer terminal 30 in the past, for example, so that the more the number of times the App has been launched, the higher the reward amount becomes. In addition, the reward amount may be determined so that the reward amount is higher for a replacer who has launched the App (and has viewed the App on the screen in addition to launching the App) at the time of notification or within a predetermined period from the time of notification to a certain time in the past than that of a replacer who has not launched the App (or has been running the App in the background even if the App has been launched).

### === Dynamic Pricing according to Supply and Demand==

In addition, the reward amount determining unit 216 may determine the reward amount according to supply and demand of the bicycles. The reward amount determining unit 216 may determine the reward amount according to, for example, the number of bicycles 1 using the station 2 as the departure station. The reward amount determining unit 216 may determine the reward amount, for example, so that the reward amount as to a bicycle parked at the station 2 of high demand is higher than that as to a bicycle parked at another station 2. The reward amount determining unit 216 may calculate aggregate past demand (the number of reservations made using the station 2 as the departure station) for each one or more combinations of, for example, a season, day of the week, date, or time period, and the reward amount as to a station 2 of high aggregate value (which may be a total value, a normalized value by dividing the total number by the number of parking spaces, or statistics such as a mean value) is higher than that as to another station.

The reward amount determining unit 216 may also determine the reward amount according to the supply, i.e., the number of bicycles 1 for which a certain station 2 is set as the destination station. The reward amount determining unit 216 may calculate aggregate past supply (the number of reservations made using the station 2 as the destination station) for each one or more combinations of, for example, a season, day of the week, date, or time, and the reward amount as to a station 2 of low aggregate value (which may be a total value, a normalized value by dividing the total number by the number of parking spaces, or statistics such as a mean value) is higher than that as to another station.

The reward amount determination unit 216 may determine the reward amount according to both the amount of demand and the amount of supply. The reward amount determining unit 216 may determine the reward amount so that, for example, the lower the number of supply minus the number of demand is, the higher the reward amount becomes. The number of supply and the number of demand may also be calculated for each of one or more combinations of, for example, a season, day of the week, date, or time zone.

In addition, the reward amount determining unit 216 may evaluate the number of demand based on the number of launching the App. The reward amount determining unit 216 may determine the amount of demand by counting the number of times the App was launched for use of a bicycle 1 by a user or the number of times the App screen was displayed on a user terminal. In addition, the reward amount determining unit 216 may, at the time of reward amount notification or within a predetermined time from the time of notification to a certain time, count the number of Apps running or having been launched, or the number of Apps being displayed or having been displayed, as the amount of demand.

In addition, the reward amount determining unit 216 may acquire the amount of demand as the battery charge amount (the amount of electricity obtained by subtracting the remaining charge from the amount of full charge).

The reward determining unit 216 may also predict demand and/or supply and determine the reward amount according to the predicted demand and/or supply. As described above, the demand may be, for example, the number of bicycles 1 for which the station 2 is expected to be used as a departure station, or the amount of power obtained by subtracting the remaining charge from the full charge amount of the bicycle 1 parked at the station 2. The reward amount determining unit 216 may determine the reward amount according to the amount of demand and/or the amount of supply from the time when a notification is given to a predetermined time (for example, 30 minutes, 60 minutes, etc.) so that the higher the amount of demand is, the lower the amount of supply is, or the higher the power charge minus the supply is, the higher the amount of the reward becomes.

The reward amount determining unit 216 may also determine the reward amount according to the demand and/or supply, considering a time from when the request for replacement is transmitted to when the charging is completed. The reward amount determining unit 216 may, for example, calculate aggregate amount of time taken from the transmission of the replacement request to the finishing of the charge (finishing the replacement of the battery) for each station 2, or for each season, month, day of the week, or time zone, and determine the reward amount according to the aggregate amount. For example, the reward amount determining unit 216 may determine the reward amount so that the longer the time to complete the charging is taken, the higher the reward amount becomes. The reward amount determining unit 216 may determine the reward amount according to the maximum amount of demand forecast value to the time of the completion of the charge.

The reward paying unit 217 performs processing of payment of reward to a replacer 3. The processing of payment of the reward by the reward paying unit 217 may employ general processing such as, for example, a bank transfer and money remittance (or point-giving) processing to an electronic money account and a point account, or the like.

### == Replacer Terminal 30 ==

The replacer terminal 30 includes a replacement request receiving unit 311, a vehicle body information acquiring unit 312, a replacement start notification transmitting unit 313, and a replacement completion notification transmitting unit 314.

The replacement request receiving unit 311 receives a replacement request. The replacement request receiving unit 311 receives the replacement request notified from the management server 20. The replacement request receiving unit 311 may access the management server 20 and transmit the replacement request.

The vehicle body information acquiring unit 312 acquires vehicle body information. In the present embodiment, the replacement request includes the vehicle body information related to the bicycle 1 for which the battery 14 is to be replaced. However, a replacer 3 can obtain vehicle body information related to another bicycle 1 of the station 2 at which the bicycle 1 is parked. In this way, along with replacing the battery 14 of the bicycle 1 corresponding to the replacement request, the battery 14 of the bicycle 1 in which the charging power remains but not fully charged is replaced among bicycles 1 parked at the station 2, it is possible to recognize the reward amount that can be additionally received. In this way, replacers 3 are motivated to replace the battery 14 in advance not only for the bicycle 1 for which the replacement of the battery 14 is necessary but also for another bicycle 1, thereby battery charge amount of batteries 14 of bicycles 1 at the station 2 as a whole can be maintained high.

The replacement start notification transmitting unit 313 transmits a replacement start notification to the management server 20 in response to an instruction from a replacer 3 who has decided to replace the battery 14 of a specified bicycle 1 in response to the replacement request. The replacement start notification transmitting unit 313 can set the vehicle body ID specifying a bicycle 1 designated by the replacer 3 to the replacement start notification. For example, the replacement start notification transmitting unit 313 may accept the designation of whether to replace the battery 14 of the bicycle 1 by displaying the vehicle body information included in the replacement request. In addition, the replacement start notification transmitting unit 313 may, in response to an instruction from the replacer 3, cause the vehicle body information acquiring unit 312 to acquire the vehicle body information of another bicycle 1 that is parked at the same station 2 of the bicycle 1, output the acquired vehicle body information, and receive the designation of the bicycle 1 to replace a battery of, from the replacer 3.

The replacement completion notice transmitting unit 314 transmits a replacement completion notice to the management server 30 after the replacement of the battery 14 is completed. For example, the replacement completion notification transmitting unit 314 may detect the completion of the replacement of the battery 14 by detecting a change in the battery level, and transmit the replacement completion notice to the management server 30 or may accept input from the replacer 3, for example, that the replacement of the battery 14 has been completed.

### <Actions>

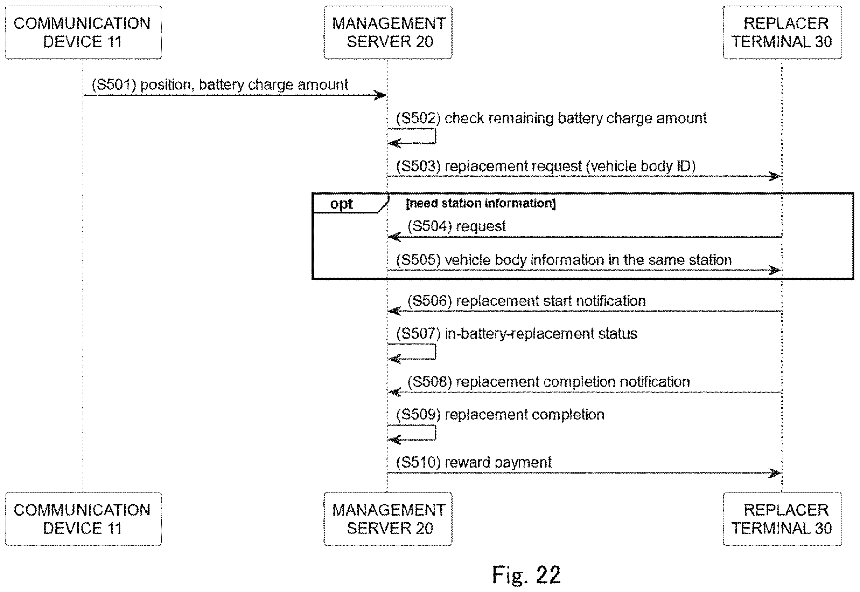

Hereinafter, actions of the operation support system according to the present embodiment will be described. FIG. 22 is a diagram illustrating actions of a system relating to replacement of a battery 14.

The communication device 11 periodically notifies the management server 20 of the position of the bicycle 1 and the battery charge amount (remaining charge) of the battery 14 (S501). The management server 20 checks whether the remaining battery charge amount is equal to or less than a predetermined threshold value (S502). When the remaining battery charge amount is less than or equal to the threshold value, the management server 20 transmits to the replacer terminal 30, a replacement request to which the vehicle body information of the bicycle 1 is set (S503). In addition, the replacer terminal 30 may notify the management server 20 of the position of the replacer terminal 30, and the replacement request may be transmitted to a predetermined number of the replacer terminals 30 in descending order of the distance from or to the replacer terminals 30, or the replacer terminals 30 located within a predetermined distance from the position of the bicycle 1 whose remaining battery charge amount is equal to or less than the threshold value.

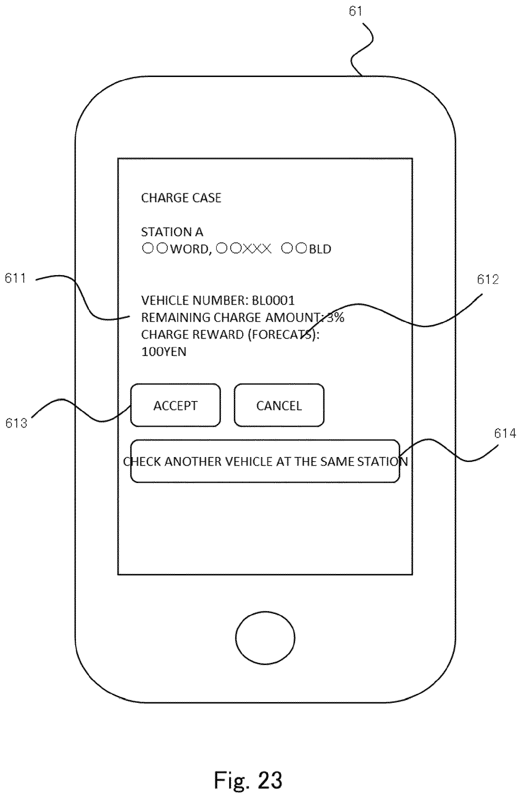

The replacer terminal 30 may display the vehicle body information set in the replacement request and receive an instruction from the replacer 3, as to whether to replace the battery. Fig. 23 is a diagram illustrating an example of a screen 61 for displaying vehicle body information pertaining to the replacement request. The vehicle body information 611 is displayed on the screen 61. In addition, the replacer terminal 30 may display reward amount 612 multiplied by a predetermined unit price for the battery charge amount in the vehicle body information. The reward amount 612 determined in advance by the management server 20 may be in the replacement request to be transmitted. When the replacer 3 presses a button 614, the replacer terminal 30 transmits a request of the vehicle body information (including the vehicle body ID) to the management server 20 (S504) and the management server 20 can respond to the replacer terminal 30, another vehicle body information including the same station ID as that in the vehicle body information corresponding to the vehicle body ID (S505). The replacer terminal 30 displays the received vehicle body information in the same manner as that of the screen 61 and accepts the designation of the bicycle 1 for which the battery is to be replaced. For example, when the bicycle 1 which is the target of the replacement of the battery is designated by the button 613 pressed on the screen 61, the replacer terminal 30 transmits to the management server 20, a replacement start notification to which the specified vehicle body ID(s) is set (S506). When the status of the vehicle body information corresponding to the specified vehicle body ID is available, the management server 20 can set the status to in battery replacement (S507).

When the battery replacement is completed, the replacement completion notification is sent from the replacer terminal 30 to the management server 20 (S508), and the management server 20 sets the status of the vehicle body information to available (S509), determines the reward amount according to the battery charge amount required for the replaced battery 14, and performs the process of paying the determined reward amount to the replacer 3 (S510).

As described above, according to the operation support system of the present embodiment, it is possible to replace the battery 14 of the bicycle 1 pertaining to the shared service by crowd sourcing.

Although the present embodiment has been described above, the above-described embodiment is intended to facilitate the understanding of the present invention and is not intended to be a limiting interpretation of the present invention. The present invention may be modified and improved without departing from the spirit thereof, and the present invention also includes its equivalent.

### <Modification>

For example, in the present embodiment, a sharing service of the motorized bicycle 1 is assumed. However, the service may be applied to any type of service using a vehicle using a battery, such as an electric kickboard or an electric cart. In addition, even if the vehicle is not equipped with an electric motor, it is possible to apply to a vehicle equipped with a battery.

In the present embodiment, it is assumed that the replacer 3 replaces the battery 14. However, it is also possible that the replacer 3 brings the bicycle 1 back home to charge the battery and returns the bicycle 1 to the station 2 after the charging.

In the present embodiment, the vehicle body information is all transmitted from the bicycle. However, for example, the position information may be received from the user terminal, such as a smartphone operated by the user.

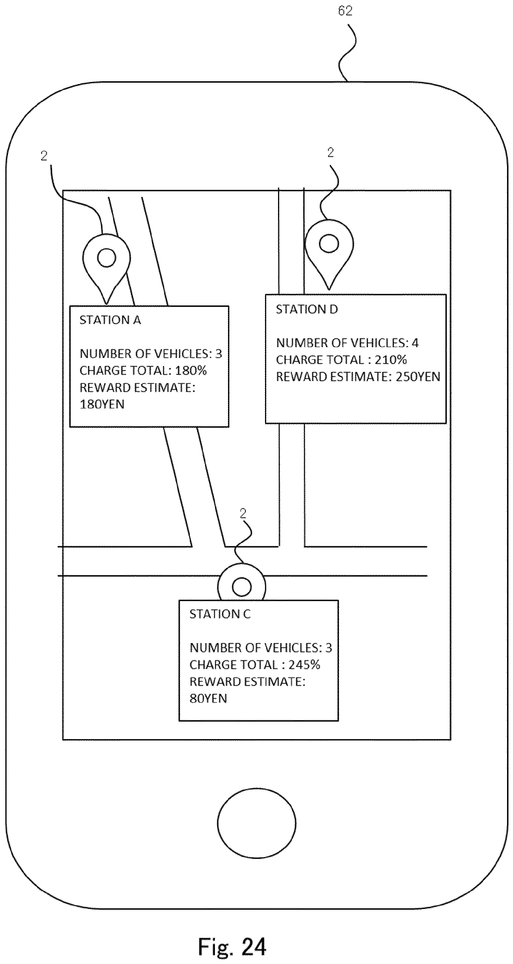

In the present embodiment, the reward amount per bicycle is presented based on the vehicle body information of the bicycle 1. However, the reward amount may be displayed for each station 2. FIG. 24 is a diagram illustrating an example of a screen 62 for presenting the reward amount for each station 2. As shown in FIG. 24, by presenting the total of the reward amount according to the battery charge amount of the vehicle body information for each station 2, the replacer 3 may consider which station 2 should the one to go to replace the battery 14. Here, the management server 20 can determine a different reward amount for each bicycle 1 in accordance with the replacer 3 or the station 2 as described above. Even in these cases, the determined reward amount should be calculated for each station 2 and presented.

In the present embodiment, the reward amount determining unit 216 may vary the reward for the battery replacement. In addition to or instead of the variation of the reward amount for each battery replacement, it is possible to provide a bonus reward to the replacer 3. For example, the management server 20 may provide a bonus to a replacer 3 who has replaced batteries for a predetermined number of times or more, a replacer 3 who has charged batteries for a predetermined amount of power or more, a replacer 3 who has moved for a predetermined distance or more, and so forth, within a predetermined period, according to the number of replacement times, a battery charge amount, a distance moved, and so forth.

In the present embodiment, the bicycle can be reserved at any time, but it is also possible to determine whether the bicycle can be reserved depending on the battery charge amount. For example, if the battery charge amount falls below a predetermined threshold, a reservation may not be permitted. In this case, the threshold may be changed for each station 2. For example, for a station 2 which is considered to be easy to replace the battery, the threshold may be higher than for another station 2, to increase the possibility that the reservation cannot be made on the station 2. The determination of how easy to replace battery may be dynamically determined. For example, the management server 20 may acquire the position of the replacer and evaluate that the more replacers are present within a predetermined distance from the station 2, the easier the battery is to be replaced.

In the present embodiment, it is assumed to present inducement of a battery replacement to the replacer such as people in general, and that the replacer him/herself can decide whether to replace the battery. However, the battery replacement is not limited to such mode, and a business entity which operates the shared service may have its employee replace the battery. In this case, the management server 20 may calculate the amount of demand for each station 2 (the number of bicycles 1 using the station 2 as the departure station) and the required amount of charging for each station 2 (the total amount of electric energy obtained by subtracting the remaining battery charge amount from the full battery charge amount of each bicycle 1) and search for a route (distribution route) of the battery replacement according to these calculations.

The management server 20 may also determine a time zone for replacing a battery for the replacer. The management server 20 may, for example, determine a battery of which station 2 to replace in which time zone, according to the amount of demand (the total number of bicycles or the battery charge amount required) per time zone. In this case, a time zone that the replacer is to replace the battery, the station 2, and the number of batteries can be determined so that the total amount of remaining charge becomes the highest at the stations 2 in the whole or within a predetermined area. The management server 20 may also accept from the replacer, an input of the reward amount he/she desires to obtain and determine the number of batteries to be replaced and the station 2 for which the replacement is to be done, so that he/she may obtain the accepted desired "reward amount.

### <Fourth Embodiment>

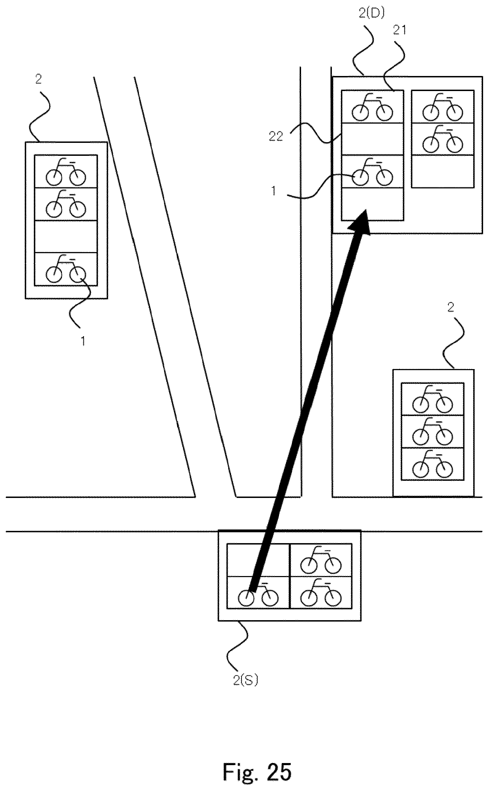

Hereinafter, an operation support system for a sharing service of vehicle according to another embodiment of the present invention will be described. In the present embodiment, a shared service (including rental service) of an electric scooter is assumed. Note that the operation system of the present embodiment may be applied to the shared service of any vehicle. Fig. 25 is a diagram illustrating the shared service of the electric scooter according to the present embodiment. Scooters 1 are parked at stations 2 located in various places. In the present embodiment, the station 2 means a location where scooter 1 can be parked. Up to a predetermined number of scooters 1 may be parked at the station 2. That is, at least one of in-use spot 21 and empty spot 22 may be present at each station 2. The user of the scooter sharing service may move from the departure station 2(S) to the destination station 2(D) by the scooter 1.

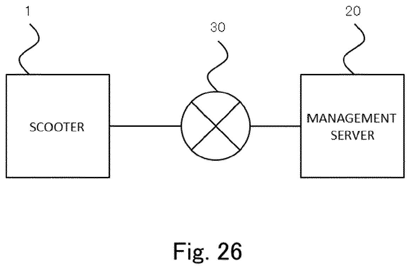

Fig. 26 is a diagram illustrating an example of the overall configuration of the operation support system according to the present embodiment. The operation support system of the present embodiment includes a management server 20. The scooter 1 has a communication function and is communicatively connected to each other via a communication network 30 with the management server 20. The management server 20 is also communicatively connected to a user terminal 40 via the communication network 30. The communication network 30 is, for example, the Internet and may be constructed by a public telephone network, a cellular telephone network, a wireless communication line, an Ethernet (registered trademark), or the like.

### <Scooter 1>

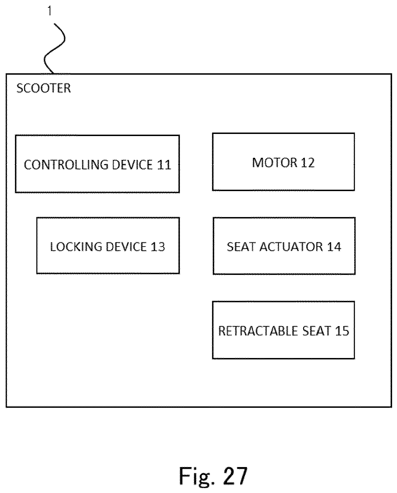

Fig. 27 is a diagram illustrating elements of the configuration of the scooter 1. The scooter 1 includes a controlling device 11, a motor 12, a locking device 13, a seat actuator 14, and a retractable seat 15.

The controlling device 11 controls the scooter 1. The motor 12 provides a thrust of the scooter 1. The locking device 13 may lock the scooter 1 to set as to whether the scooter 1 is permitted to use.

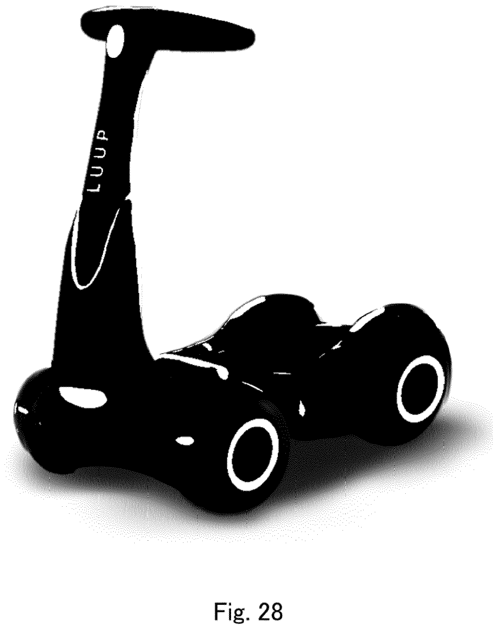

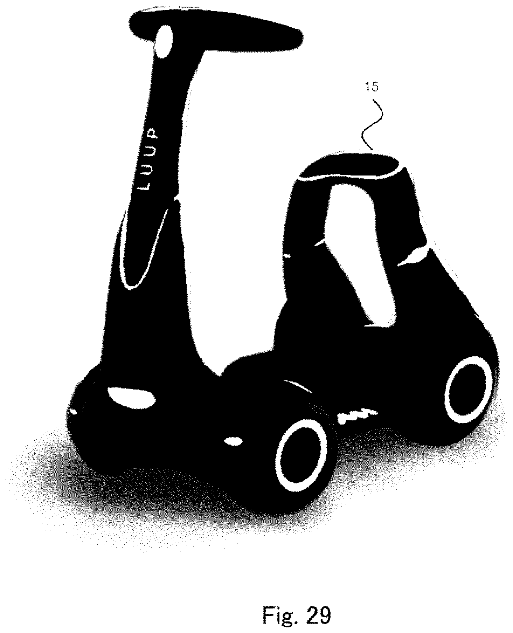

The scooter 1 also includes the retractable seat 15. FIG. 28 is a diagram illustrating an external example of the scooter 1 in which the retractable seat 15 is stored. FIG. 29 is a diagram illustrating an external example of the scooter 1 in which the retractable seat 15 is available. As shown in FIGS. 28 and 29, the seat 15 is movable and may be stored and deployed by the seat actuator 14.

### == Controlling Device 11 ==

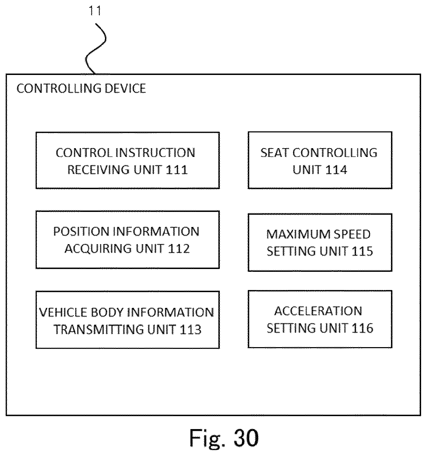

Fig. 30 is a diagram illustrating an example of the software configuration of the controlling device 11. The controlling device 11 includes a control instruction receiving unit 111, a position information acquiring unit 112, a vehicle body information transmitting unit 113, a seat controlling unit 114, a maximum speed setting unit 115, and an acceleration setting unit 116.

The control instruction receiving unit 111 receives the control instruction from the management server 30. The controlling device 11 may, for example, control to lock/unlock the locking device 13 in response to an instruction received from the management server 20.

The position information acquiring unit 112 acquires the position of the scooter 1. The position information acquiring unit 112 may, for example, acquire the position of the scooter 1 based on a GPS signal received by a GPS (Global Positioning System) receiver (may be provided by the controlling device 11 or may be obtained from an external sensor).

The vehicle body information transmitting unit 113 transmits information (vehicle body information) regarding the scooter 1 to the management server 20. The vehicle body information may include the position information acquired by the position information acquiring unit 112 and a travel speed of the scooter 1 obtained from the speed sensor (not shown) or the like. In the present embodiment, the vehicle body information transmitting unit 113 may periodically transmit the vehicle body information including at least the position information of the scooter 1 to the management server 20 while the scooter 1 is in use. The vehicle body information transmitting unit 113 may transmit the vehicle body information to the management server 20 at any predetermined time interval, such as for example, one second, one minute, five minutes, and ten minutes. The vehicle body information transmitting unit 113 may transmit the vehicle body information, for example, when the travel distance of the scooter 1 exceeds a predetermined value.

The seat controlling unit 114 can control the seat actuator 14.

The maximum speed setting unit 115 may function as a limiter to limit the maximum speed of the scooter 1 by adjusting the rotation speed or torque of the motor 12.

The acceleration setting unit 116 may also adjust the acceleration of the scooter 1, for example, by adjusting the speed of the motor 12 to increase.

### <Management Server>

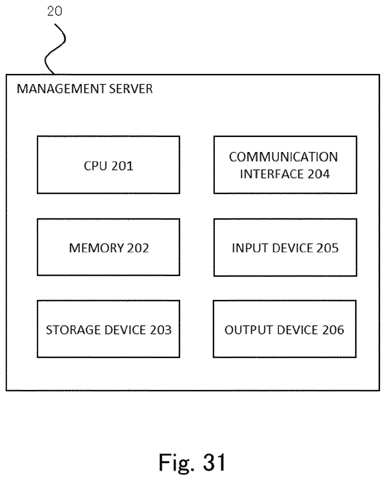

The management server 20 may be a general-purpose computer, such as a workstation or personal computer, or may be logically implemented by cloud computing. The management server 20 may determine whether a user can use the bicycle 1 and manage the usage status. Fig. 31 is a diagram illustrating an example of a hardware configuration of the management server 20. The illustrated configuration is exemplary and may have other configurations. The management server 20 includes a CPU 201, a memory 202, a storage device 203, a communication interface 204, an input device 205, and an output device 206. The storage device 203 may be, for example, a hard disk drive, a solid-state drive, a flash memory, or the like, for storing various types of data or programs. The communication interface 204 is an interface for connecting to the communication network 30, such as an adapter for connecting to an Ethernet (registered trademark), a modem for connecting to a public telephone network, a wireless communication device for performing wireless communication, a USB (Universal Serial Bus) connector for serial communication, or an RS232C connector. The input device 205 may be, for example, a keyboard or mouse, a touch panel, a button, a microphone, or the like, for inputting data. The output device 206 may be, for example, a display, a printer, a speaker, or the like, for outputting data.

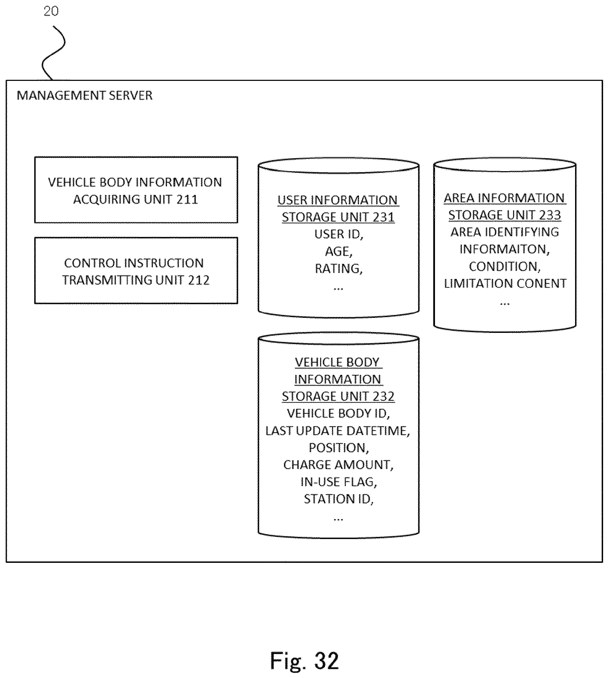

Fig. 32 is a diagram illustrating an example of a software configuration of the management server 20. The management server 20 includes a vehicle body information acquiring unit 211, a control instruction transmitting unit 212, a user information storage unit 231, a vehicle body information storage unit 232, and an area information storage unit 233.

The above-mentioned function units 211 to 212 are realized by reading out a program stored in the storage device 203 into the memory 202 and executing it, and the storage units 231 to 233 can be realized as part of the storage area provided by the memory 202 and the storage device 203.

The user information storage unit 231 stores information pertaining to the user (user information). The user information may include a user ID that identifies the user, an age of the user, and a rating of the user. The rating of the user may be set, for example, by the owner of station 2 or the operator of the system, depending on the frequency of use by the user and the condition of the vehicle body after use by the user.

The vehicle body information storage unit 232 stores information related to the scooter 1 (vehicle body information). In the vehicle body information, a vehicle body ID identifying the scooter 1, a date and time when the vehicle body information was last updated (last update date and time), a position of the scooter 1 at the last update date and time, a battery charge amount of the scooter 1, a flag indicating whether scooter 1 is currently in use (in-use flag), and a station ID indicating the station 2 at which the scooter is parked upon parking may be included. The vehicle body information can be updated regularly.

The area information storage unit 233 stores information regarding the function limitation of the scooter 1 according to the driving area (area information). The area information includes area identifying information that identifies the driving area, a condition when a function limitation is applied, and a content of the limitation. The area identifying information may, for example, identify a region on the map by such as latitude and longitude, or may be information identifying nodes and edges when a map is represented as a graph with intersections as nodes and roads as edges. The condition may be set for a user attribute (age or rating in the present embodiment) in the present embodiment. For example, it is possible to set the condition as a predetermined age or older (e.g., older persons 60 years or older). Multiple conditions may be set. The content of the limitation is the content of the function limitation of the scooter 1. For example, the maximum speed may be set to 15 km/h, the acceleration may be set to 1 m/s2, the seat 15 may be retracted, and so on.

The vehicle body information acquiring unit 211 acquires the vehicle body information transmitted from the scooter 1. The vehicle body information acquiring unit 211 may update the vehicle body information registered in the vehicle body information storage unit 232 based on the received vehicle body information.

The control instruction transmitting unit 212 (corresponding to the controlling unit of the present invention) transmits an instruction (control instruction) concerning the function control of the scooter 1 to the scooter 1. The control instruction transmitting unit 212 may, for example, transmit the control instruction indicating the unlocking of the locking device 13, to the scooter 1, upon starting use of the scooter 1.

Further, the control instruction transmitting unit 212 may transmit a control instruction indicating to control the seat actuator 14 according to the attribute of the user to store and retract the seat 15. For example, while usually seat 15 is retracted and made available for standing ride (whereby seat 15 may be deployed during use), if the user is an elderly person, the control instruction may be transmitted to the scooter 1 instructing to make seat 15 available at the beginning of use.

Further, the control instruction transmitting unit 212 may transmit to the scooter 1, a control instruction indicating to limit the maximum speed according to the attribute (age, rating, etc.) of the user. For example, for elder people or users who have had accidents in the past, the maximum speed may be lower than other users.

The control instruction transmitting unit 212 may, for example, transmit a control instruction to the scooter 1 instructing to limit the acceleration of the scooter 1 according to the attributes of the user. For example, the acceleration of scooter 1 may be limited to the elderly or users who have had accidents in the past so that sudden start should not happen.

### <Actions>

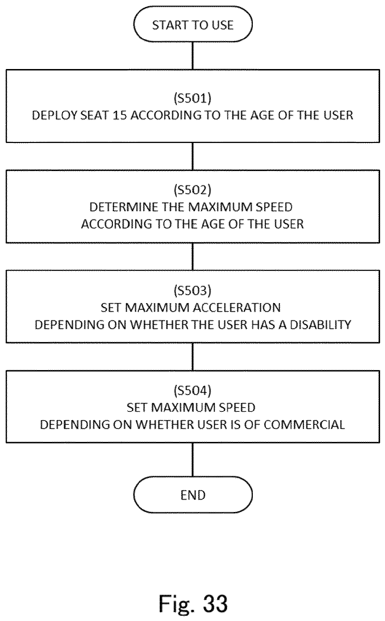

Fig. 33 is a diagram illustrating actions of the operation support system according to the present embodiment. As described above, when the scooter 1 is in use, the function of the scooter 1 is limited depending on the attribute of the user. For example, upon starting the use of the scooter 1, the control instruction transmitting unit 212 may transmit the control instruction to the scooter 1 so that the user can use the scooter 15 with the seat 15 deployed according to the age of the user (e.g., when the user's age is 60 years or older). In addition, the control instruction transmitting unit 212 may determine the maximum speed according to the age (and/or rating) of the user and may transmit the control instruction to the scooter 1 to set the determined maximum speed. The control instruction transmitting unit 212 may set the maximum speed lower than normal, for example, when the age is a predetermined age or higher (the elder) or when the rating is below a predetermined value (the rating is low that is, for example, he/she has caused an accident in the past). The control instruction transmitting unit 212 may, for example, set the maximum acceleration depending on whether the user has a disability (S503). In addition, the control instruction transmitting unit 212 may set the maximum speed, for example, depending on whether the user is a commercial user (S504).

As described above, according to the operation support system of the present embodiment, the function of the scooter 1 may be limited depending on the attribute of the user. Further, according to the operation support system of the present embodiment, the function of the scooter 1 may be limited depending on a travel route of the scooter 1.

Although the present embodiment has been described above, the above-described embodiment is intended to facilitate the understanding of the present invention and is not intended to be a limiting interpretation of the present invention. The present invention may be modified and improved without departing from the spirit thereof, and the present invention also includes its equivalent.

For example, in the present embodiment, a control instruction is transmitted from the management server 20, and the scooter 1 performs the function limitation in response to the control instruction. However, the controlling device 11 of the scooter 1 may autonomously perform the function limitation according to the attribute of the user.

In the present embodiment, the position information is transmitted from the scooter 1 to the management server 20. However, the position information of the user terminal 40 may be transmitted from the user terminal 40 to the management server 20 as the position information of the scooter 1.

In the present embodiment, setting the maximum speed, setting the maximum acceleration, and retracting the seat 15 have been described as the function limitations of the scooter 1. However, for example, in the case of a vehicle in which a motor is used to supplement human power (such as the so-called electric assisted bicycle or a kickboard), a ratio of the power to supplement human power (called the assist ratio) may be set. A usage time of the scooter 1 may also be limited (an operating time of the motor 12). In addition, it is possible to change a strength of the brake (the force applied to the brake pad when the brake lever is pulled with the same force). In addition, control buttons or the like may be positioned to the left and right of the handle and only one control button is activated according to the user's dominant arm.

In the present embodiment, it is assumed that the function of the scooter 1 is limited depending on the attribute of the user. However the additional function of the scooter 1 may be made available depending on the attribute of the user. For example, depending on the attributes of the user, it may be possible to unlock the baggage bin of scooter 1, to have a child's auxiliary chair available, to make it available to use the communication function of the scooter 1 from the user terminal 40 (tethering), or to enable charging of the user terminal 40 from the battery of the scooter 1.

In the present embodiment, the attribute of the user has been described with respect to the age and the rating of the user, but the function of the scooter 1 may be limited (or added) depending on any attribute, such as a variety of a demographic attribute, a psychographic attribute, a geographic attribute, a behavioral attribute, and the like of the user.

In the present embodiment, it is assumed that the motor 12 supplements human power, but various types of engines such as internal combustion engines may be used instead of the motor 12.

### <Fifth Embodiment>

Hereinafter, an operation support system for sharing service of mobility according to an embodiment of the present invention will be described. While the present embodiment assumes a motorized bicycle sharing service (including rental service), it can be applied to the shared service of any vehicle.

For example, the vehicle may include a single-seat vehicle (personal mobility) in its entirety. For example, the vehicle may be a single-seat personal mobility with an electric motor. The vehicle may be a bicycle, scooter, skateboard, or the like capable of switching between an electric (automatic) and an electric assist. The vehicle may not generally require parking. The vehicle may include, for example, a bicycle, a scooter (also referred to as kickboard or kick skater), a skateboard, a parallel motorcycle, an inverted motorcycle (such as Segway), a self-sustaining, stable monocycle, and the like. The vehicle may also include motorized bicycle and motorcycle. The vehicle may include one whose maximum speed is set to be less than 30 km/h (e.g., bicycle with motor), one whose maximum speed is set to be less than 24 km/h (e.g., electric assisted bicycle), and one whose maximum speed is set to be less than 20 km/h (e.g., supposed to be electric kickboard).

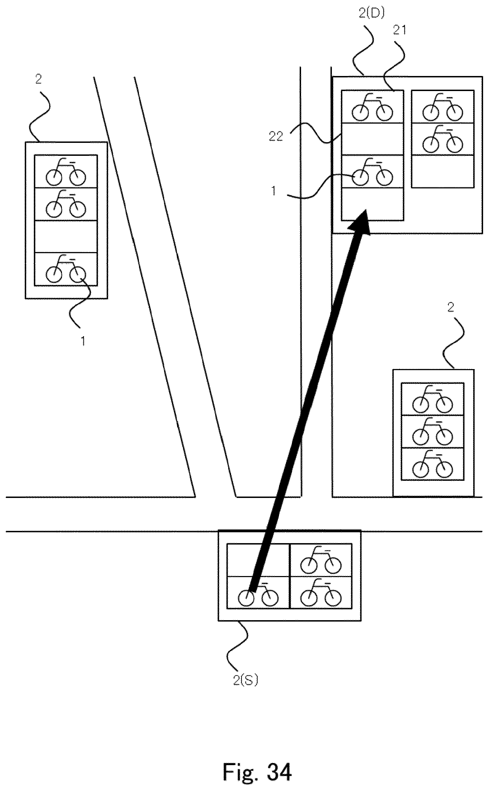

Fig. 34 is a diagram illustrating a shared service of a mobility 1 according to the present embodiment. The mobilities 1 are parked at stations 2 located in various places. In the present embodiment, the station 2 refers to a location where the mobility 1 can be parked. Up to a predetermined number, the mobilities 1 may be parked at the station 2. That is, at least one of in-use spot 21 and empty spot 22 may be present at each station 2. The user of the mobility sharing service specifies the destination station 2(D) before using the mobility 1 when moving from the departure station 2(S) to the destination station 2(D). If the empty spot 22 exists at the destination station 2(D), the use of the mobility 1 is permitted, and the mobility 1 is automatically unlocked and made available to the user. If the destination station 2(D) is not specified, it is possible to use the mobility by specifying the usage time.

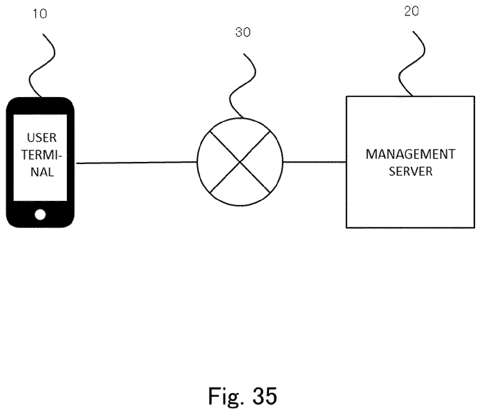

Fig. 35 is a diagram illustrating an example of the overall configuration of the operation support system according to the present embodiment. The operation support system of the present embodiment includes a management server 20. The management server 20 is communicatively connected to a user terminal 10 via a communication network 30. The communication network 30 is, for example, the Internet and may be constructed by a public telephone network, a cellular telephone network, a wireless communication line, an Ethernet (registered trademark), or the like.

### <User Terminal 10>

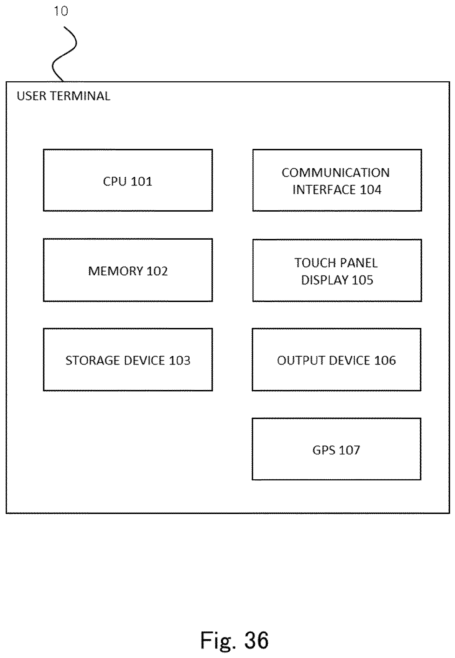

The user terminal 10 is a mobile terminal used by the user, such as a smartphone, tablet computer, personal computer, or the like. Fig. 36 is a diagram illustrating an example of a hardware configuration of the user terminal 10. The illustrated configuration is exemplary and may have other configurations. The user terminal 10 includes a CPU 101, a memory 102, a storage device 103, a communication interface 104, a touch panel display 105, an output device 106, and a GPS 107. The storage device 103 may be, for example, a hard disk drive, a solid-state drive, a flash memory, or the like, for storing various types of data or programs. The communication interface 104 is an interface for connecting to the communication network 30, such as an adapter for connecting to an Ethernet (registered trademark), a modem for connecting to a public telephone network, a wireless communication device for performing wireless communication, a USB (Universal Serial Bus) connector for serial communication, or an RS232C connector. The touch panel display 105 may input and output data. The output device 106 is a device for outputting information, such as a speaker or vibrator. The GPS 107 may measure the position of the user terminal 10.

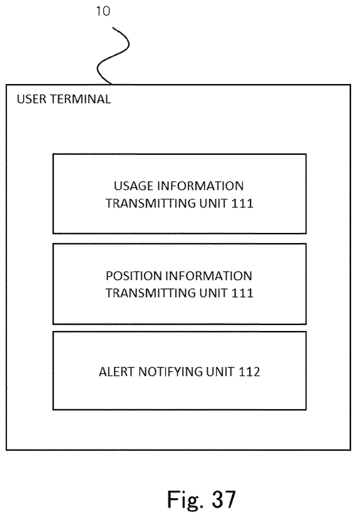

FIG. 37 is a diagram illustrating an example of a software configuration of the user terminal 10. The user terminal 10 includes a usage information transmitting unit 111, a position information transmitting unit 112, and an alert notifying unit 113. For example, the usage information transmitting unit 111, the position information transmitting unit 112, and the alert notifying unit 113 can be realized by reading out a program stored in the storage device 103 to the memory 102 and executing it by the CPU 101 the user terminal 10 comprises.

The usage information transmitting unit 111 transmits information pertaining to use of the mobility 1 (hereinafter referred to as usage information). For example, the destination station 2 or the usage time can be set in the usage information. The usage information transmitting unit 111 may receive a designation of the destination station 2 or an input of the usage time from the user at the start of the use of the mobility 1, and transmit the usage information to which the received destination station 2 or the usage time is set, to the management server 3. Even when the destination station 2 is specified, the usage time may also be specified.

The position information transmitting unit 112 transmits a position of the mobility 1. In the present embodiment, the position information transmitting unit 112 transmits a position (the position of the user terminal 10) obtained from the GPS 107 as the position of the mobility 1 to the management server 20. Note that GPS 107 may be provided to the mobility 1, and the position information transmitting unit 112 may, for example, acquire position information from the mobility 1 via communication by such as Bluetooth (registered trademark) and transmit the acquired position information to the management server 20. The mobility 1 may have a communication function, and the mobility 1 may comprise the position information transmitting unit 112. In addition to the GPS, any sensor capable of acquiring the position of the mobility 1, such as a gyro sensor, may be employed.

The alert notifying unit 113 notifies an alert. In the present embodiment, the alert notifying unit 113 may receive an alert from the management server 20, display a message on the touch panel display 105, output a sound indicating that the alert has arrived from the output device 106, such as a speaker, and/or activate the output device 106, such as causing vibration.

### <Management Server 20>

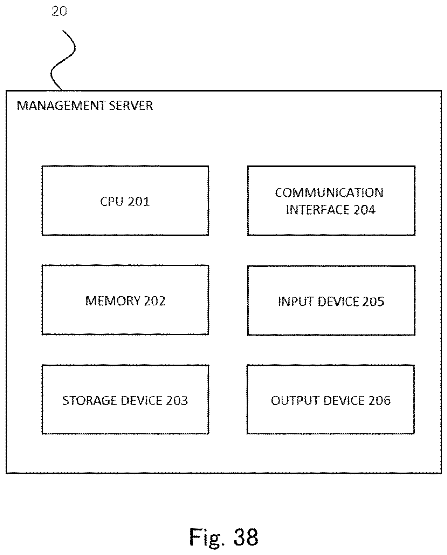

The management server 20 may be a general-purpose computer, such as a workstation or personal computer, or may be logically implemented by cloud computing. The management server 20 may determine whether the mobility 1 is permitted for the user to use and manage the usage state. Fig. 38 is a diagram illustrating an example of a hardware configuration of the management server 20. The illustrated configuration is exemplary and may have other configurations. The management server 20 includes a CPU 201, a memory 202, a storage device 203, a communication interface 204, an input device 205, and an output device 206. The storage device 203 may be, for example, a hard disk drive, a solid-state drive, a flash memory, or the like, for storing various types of data or programs. The communication interface 204 is an interface for connecting to the communication network 30, such as an adapter for connecting to an Ethernet (registered trademark), a modem for connecting to a public telephone network, a wireless communication device for performing wireless communication, a USB (Universal Serial Bus) connector for serial communication, or an RS232C connector. The input device 205 may be, for example, a keyboard or mouse, a touch panel, a button, a microphone, or the like, for inputting data. The output device 206 may be, for example, a display, a printer, a speaker, or the like, for outputting data.

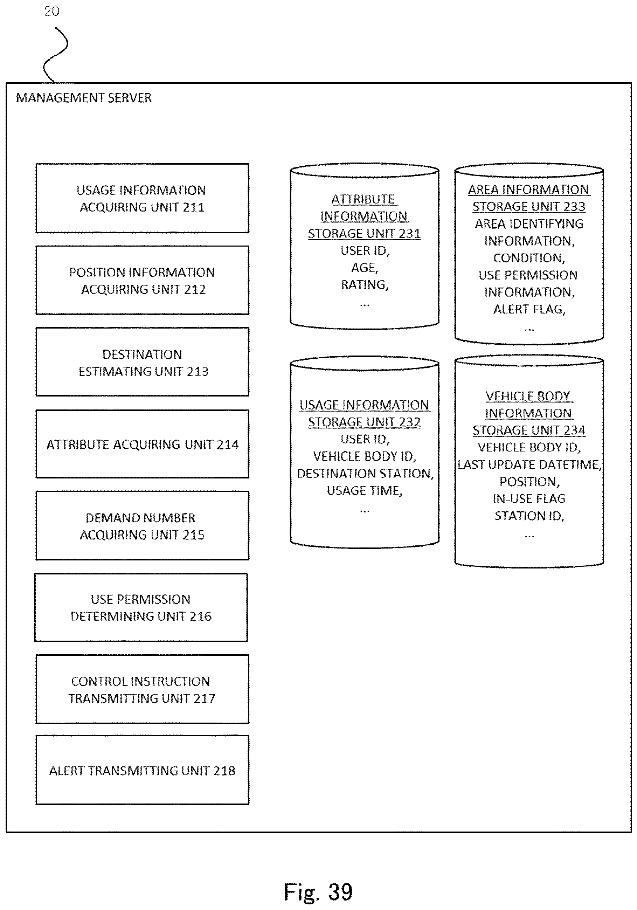

Fig. 39 is a diagram illustrating an example of a software configuration of the management server 20. The management server 20 includes a usage information acquiring unit 211, a position information acquiring unit 212, a destination estimating unit 213, a attribute acquiring unit 214, a demand number acquiring unit 215, a use permission determining unit 216, a control instruction transmitting unit 217, an alert transmitting unit 218, an attribute information storage unit 231, a usage information storage unit 232, an area information storage unit 233, and a vehicle body information storage unit 234.

The function units 211 to 218 are realized by reading and executing a program stored in the storage device 203 from the memory 202, and the storage sections 231 to 234 can be realized as part of the storage area provided by the memory 202 and the storage device 203.

The attribute information storage unit 231 stores information related to an attribute of the user (hereinafter referred to as attribute information). In the attribute information, a user ID identifying the user, an age of the user, and a rating of the user may be included. The rating of the user may be set, for example, by the owner of the station 2 or the operator of the system, depending on the frequency of use by the user and a condition of the vehicle body after use by the user. The attribute information may also include various other information indicating a user attribute.

The usage information storage unit 232 stores usage information. In the usage information, for example, the destination station 2 or the usage time may be set so as to associate with the user ID indicating the user and the vehicle body ID indicating the mobility used by the user, as described above.

The area information storage unit 233 stores information used for determining whether the mobility 1 is permitted to use according to a driving area (hereinafter referred to as area information). The area information includes area identifying information that identifies a driving area, a condition, use permission information, and an alert flag that indicates whether to alert. The area identifying information may, for example, identify an area on a map by such as latitude and longitude, or it may be information identifying nodes or edges when a map is presented by a graph with intersections as nodes and roads as edges. In the present embodiment, the condition may be set corresponding to an attribute of the user (e.g., age or rating). For example, a predetermined age or older (e.g., older persons 60 years or older) may be set. The multiple conditions may be set, or no condition may be set. The use permission information is information indicating whether the mobility 1 is permitted to use for a user who satisfies the conditions as to the area. In the present embodiment, a true (use permitted) or false (use not permitted) flag value is set. If the alert flag is true, the user can be notified of the alert.

The vehicle body information storage unit 234 stores information related to the mobility 1 (hereinafter referred to as vehicle body information). The vehicle body information may include a vehicle body ID identifying the mobility 1, a date and time when the vehicle body information was last updated (last update date and time), a position of the mobility 1 at the last update date and time, a battery charge amount of the mobility 1, a flag indicating whether or not the mobility 1 is currently in use (in-use flag), and, if the mobility 1 is parked, a station ID indicating a station 2 at which the mobility 1 is parked. The vehicle body information may include not only these information but also various information related to the mobility 1. The vehicle body information can be updated regularly. The vehicle body information may, for example, be acquired from the mobility 1 or may be acquired from the user terminal 10. In the present embodiment, in order to simplify the explanation, it is assumed that only the position of the vehicle body information is transmitted from the user terminal 10 as the position information.

The usage information acquiring unit 211 acquires usage information. In the present embodiment, the usage information transmitted from the user terminal 10 is received.

The position information acquiring unit 212 acquires position information of the mobility 1. In the present embodiment, the position information is received from the user terminal 10, or the position information may be received from the mobility 1. Also, for example, the monitoring device may be provided on the road to monitor the mobility 1 to acquire the position of the mobility 1 recognized by the monitoring device.

The destination estimating unit 213 estimates a destination of mobility 1. The destination estimating unit 213 may estimate a destination station when the destination station is specified in the usage information. The position on the map of the destination station may be stored, for example, in the storage device 203. The destination estimating unit 213 may be configured to estimate multiple destinations. For example, when there is a user in the past who set a destination station, but the returned the mobility at a different destination station, the destination estimating unit 213 may estimate the destination station set in the usage information and the destination station used in the past as the destination stations. The destination estimating unit 213 may estimate the destination prior to use of the mobility 1, for example, upon obtaining the usage information.

The destination estimating unit 213 may also update the estimated destination. For example, the destination estimating unit 213 may change the destination depending on a current position of the mobility 1. The destination estimating unit 213 may include the current position as one destination. The destination estimating unit 213 may, for example, identify the travel vector of the mobility 1 based on the travel trajectory of the mobility 1 (which may be created by connecting the position information obtained periodically from the mobility 1), and estimate the position after a predetermined time has passed (for example, a setting value of 1 minute, 5 minutes, 10 minutes, and so forth, or the remaining time until the usage time elapses when the usage time is set in the usage information) as a destination.

The attribute acquiring unit 214 acquires an attribute of the user. In the present embodiment, the attribute acquiring unit 214 acquires the attribute of the user from the attribute information storage unit 231. However, the attribute acquiring unit 214 may acquire the attribute of the user according to various methods. The attribute acquiring unit 214 may acquire various behavior attributes, for example, by analyzing a response from a user with respect to a questionnaire to obtain psychographic attributes, or by analyzing the user's past usage history to obtain user's behavior attributes, such as when, in which area, at what speed, etc. the user uses the mobility 1.

The demand acquiring unit 215 acquires the number of demands for the mobilities 1. The demand may be, for example, the number of the mobilities 1 currently in use. In addition, the demand number acquiring unit 215 may forecast the number of the mobilities 1 to be used in the future based on the past usage history of the mobility 1 and set the demand number as the number of mobility bodies. The demand quantity acquiring unit 215 may, for example, acquire the number of demands for each used area (an area containing the position of the current mobility 1) or may acquire the number of demands for each destination or each area containing the destination.

The use permission determining unit 216 determines whether use of the mobility 1 is permitted. The use permission determining unit 216 may determine whether use of the mobility 1 is permitted depending on a destination. For example, the use permission determining unit 216 may not permit use of the mobility 1 if the destination is not within a predetermined range from the mobility 1.

The use permission determining unit 216 can determine whether use of the mobility 1 is permitted using the area information stored in the area information storage unit 233. If, for example, the location of the destination estimated by the destination estimating unit 213 is included in the area specified by the area identifying information, and the area information that satisfies the condition is registered in the area information storage unit 233, the use permission determining unit 216 may permit use of the mobility 1 according to the use permission information. When the above-described area information is not registered in the area information storage unit 233, whether use of the mobility 1 is permitted may be set as a default value in advance. If there are multiple destinations, for example, the use permission determining unit 216 may determine whether use of the mobility 1 is permitted for each destination as described above, and may conclusively permit use of mobility 1 when the use as to all or part of the destinations is permitted. As described above, the current position of mobility 1 can be also determined as a destination, thereby it is possible to determine an area that may be traveled.

In addition, when the destination estimating unit 213 updates the destination according to the position of the mobility 1, the use permission determining unit 216 may determine whether use of the mobility 1 is permitted according to the updated destination. The use permission determining unit 216 determines whether use of the mobility 1 is permitted based on the usage information at least at the start of use, and may determine whether use of the mobility 1 is permitted based on the vehicle body information at least after the start of use.

In addition, the use permission determining unit 216 may determine whether use of the mobility 1 is permitted in accordance with the number of demands obtained by the demand number acquisition unit 215. For example, the use permission determining unit 216 may, when use is started at a departure station in an area where demand is large (an area where demand exceeds a predetermined threshold value), not permit the use unless the departure station or another station in the area is set as the destination station.

In addition, when the usage time (the estimated time the user is scheduled to use the mobility 1) is set in the usage information, the use permission unit 216 may determine whether use of the mobility 1 is permitted according to the usage time. For example, the use permission determining unit 216 may not permit use of a time longer than a predetermined maximum time. In addition, the use permission determining unit 216 may determine whether use of the mobility 1 is permitted depending on the usage time and the area. For example, when the usage time is longer than a predetermined threshold value, the use permission determining unit 216 may determine whether use of the mobility 1 is permitted according to the destination so that a distance to the destination is not more than a predetermined distance.

The use permission determining unit 216 may determine whether use of the mobility 1 is permitted according to the attribute of the user. For example, the use permission determining unit 216 may not permit use for a user of a predetermined age or older when a distance to the destination is longer than a predetermined distance or may not permit use for a user when the usage time is longer than a predetermined time. The use permission determining unit 216 may, for example, not permit use of the mobility 1 when a distance to the destination is more than the predetermined distance or when a time to be used is more than the predetermined time, for a user whose rating is lower than a predetermined value. The use permission determining unit 216 may, for example, permit use of the mobility 1 for a user whose rating is equal to or greater than a predetermined value, when a distance to the destination is more than a predetermined distance or when a time to be use is more than a predetermined time. In addition, the use permission determining unit 216 may prohibit use of the mobility 1 in a specified area for a user under a predetermined age.

The control instruction transmitting unit 217 transmits an instruction (hereinafter referred to as control instruction) relating to the control of the mobility 1. The control instruction transmitting unit 217 may, for example, transmit the control instruction for unlocking the mobility 1 to enable the mobility 1 only when the use permission determining unit 216 permits use of the mobility 1 before the start of the use of the mobility 1. The control instruction transmitting unit 217 may, for example, generate a dynamic password for unlocking and transmit the password to the user terminal 10 without performing direct communication with the mobility 1.

The alert transmitting unit 218 transmits an alert to the user terminal 10. When the alert notifying device (for example, an output device such as a display or a speaker) is provided on the mobility 1, the alert transmitting unit 218 may transmit the alert to the mobility 1. In the present embodiment, when the use permission determining unit 216 does not permit use of the mobility 1, a message indicating accordingly may be transmitted as an alert.

### <Actions>

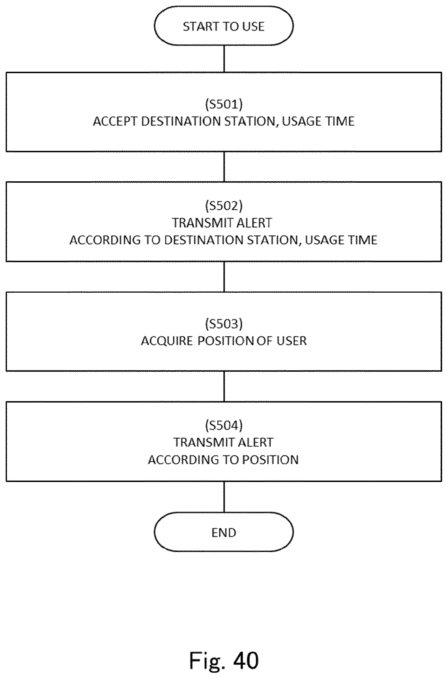

Fig. 40 is a diagram illustrating actions of the operation support system according to the present embodiment.

When use of the mobility 1 is started, the user terminal 10 accepts a designation of a destination station and a usage time (S501). The user terminal 10 transmits the usage information to which the destination station and the usage time are set, to the management server 20, and the management server 20 determines whether use of the mobility 1 is permitted according to the destination station and the usage time set in the usage information, and when the use is not permitted, transmits an alert to the user terminal 10 (S502). In addition, the user terminal 10 transmits a position of the mobility 1 (in the present embodiment, the position of the user terminal 10) to the management server 30, and the management server 30 may acquire the position of the mobility 1 (S503), estimate a destination according to the acquired position, determine whether use of the mobility 1 is permitted according to the estimated destination, and when the use is not permitted, transmit the alert to the user terminal 10 (S504).

As described above, according to the operation support system of the present embodiment, it is possible to transmit the alert according to the destination (including the present location) set by the user. Thus, for example, if there is a high demand for the mobility 1 in a certain area, bringing the mobility 1 out to the other area may not be permitted and whether use of the mobility 1 is permitted may be determined so as to use another station 2 of an area including the departure station and the destination station, or a station 2 of another area with high demand, as a destination to return. In addition, when the mobility 1 is in use in a use prohibition area (which can be set depending on the user), an alert may be issued (when the current position of the mobility 1 is within the travel prohibition area).

Although the present embodiment has been described above, the above-described embodiment is intended to facilitate the understanding of the present invention and is not intended to be a limiting interpretation of the present invention. The present invention may be modified and improved without departing from the spirit thereof, and the present invention also includes its equivalent.

For example, in the present exemplary embodiment, it is to determine whether use of the mobility 1 is permitted depending on the destination, the time of use, the attributes of the user, and the demand, but the usage fee may be determined. For example, the management server 20 may set higher usage fee for the mobility 1 instead of not permitting use, depending on at least one of the destination, the time of use, the attribute of the user, and the amount of demand. The management server 20 may also, for example, set the usage fee so that the higher the amount of demand is, the lower the usage fee becomes, depending on the amount of demand and the destination station (or an area containing the destination station), so as to give users an incentive to return to the area with higher demand.

Also, for example, the usage fee may be determined according to a route traveled by the mobility 1. In this case, the management server 20 may accumulate the history of the position information of the mobility 1 and determine the travel route of the mobility 1. The management server 20 may also, for example, discount the usage fee if the mobility 1 passes through a particular road. This may be used, for example, as an incentive for visitors to a shopping district, a commercial facility, and an event. Here, the management server 20 may transmit a message recommending the area to the user terminal 10 if there is an area (such as a road, commercial facility, or event venue) near which the usage fee is subject to discount depending on the present position of the mobility 1.

In the present embodiment, an alert is transmitted to the user terminal 10. However, in addition to it or instead of it, the function of the mobility 1 may be reduced (for example, the maximum speed or the assist ratio may be reduced) and the function of the mobility 1 may be controlled so that the function of the mobility 1 does not eventually work.

In the present embodiment, when the destination (including the present position) is included in the use prohibition area, the use is not permitted (not transmitting the control instruction) or the alert thereof is made. However, the present invention is not limited to these cases. For example, control may be applied so that, for a vehicle such as an electric scooter, the maximum speed may be lowered, and, for a vehicle such as an electric assisted bicycle, an assist ratio (the ratio of the power to human power to supplement human power) may be lowered.

In the present embodiment, the destination is estimated, and whether use of the mobility 1 is permitted is determined, or the alert is transmitted, depending on the estimated destination (depending on whether the destination is included in the travel prohibition area). However, the alert may be transmitted according to the current position of the mobility 1, or the function of the vehicle may be limited (such as a decrease in the maximum speed or a decrease in the assist ratio).

In addition, the usage fee for the mobility 1 may be varied depending on the destination. For example, if the number of the mobilities 1 parked at the destination station is small (e.g., if the number is less than a predetermined number or if the percentage of parked mobilities with respect to the maximum number of parked mobilities is less than a predetermined value), the usage fee may be changed to be less expensive than normal.

It may also be possible to reward users according to a destination. For example, if the number of the mobilities 1 parked at the destination station is small as described above, a user who sets this station as the destination station may be rewarded for a discount with respect to the usage fee, issuance of coupons available for some goods or services, issuance of points, etc. In this case, the discount rate, the coupon content, and the amount of points issued can be changed depending on availability at the station.

In addition, when a user approaches a station (e.g., the management server 20 may acquire the position information of the user terminal 10) with a large number of parked mobilities 1 (where there are a predetermined number of parked mobilities or more, or there are mobilities occupying a predetermined ratio or more with respect to the maximum number of parked mobilities), an incentive to promote use of the mobility 1 using the station as a departure station may be issued to the user approaching the station. The incentive may include, for example, discounting a usage fee, issuing a point, issuing a coupon, and the like.

### <Limitation when Setting Area is entered>

For example, if the management server 20 or the computer equipped with the mobility 1 detects that the body of the mobility 1 has entered a preset setting area, the following limitations may be imposed on the mobility 1.

The detection of entering the setting area may be determined by the position information received from the mobility 1.

### (1) To make it impossible to finish the use of such mobility 1.

For example, payment upon finishing of use of the mobility 1 may be prevented and the charge may continue. In the present embodiment, the mobility 1 is assumed to be parked at a station. However, for example, it is possible to design the mobility 1 so that the use of the mobility 1 may be finished by parking the mobility 1 in a place other than a station in the event of a failure, in the event of a bad health condition of the user, or the like. In this case, it is possible to set an abandon-prohibited area, and in the abandon-prohibited area, the finishing to use is not permitted and charging continues. For example, a range within a predetermined distance from a station may be set as the abandon-prohibited area.

### (2) To notify an alert

For example, the management server 20 may notify the user terminal 10 of a message indicating that the mobility 1 has entered the setting area, and inform accordingly by means of sound, text, images, etc. For example, the management server 20 may transmit a message to the controlling device provided in the mobility 1, and the mobility 1 may notify accordingly by sound, light, or the like.

### (3) To limit the maximum speed

### (3-1) by municipality

Based on the position information of the vehicle body, for example, it is possible to detect the mobility 1 entering a specific municipality and to set different maximum speeds for each municipality. This may be applied, for example, to the case that the mobility 1 is a motorized mobility such as an electric scooter or an electric bicycle. The management server 20 may control the vehicle body so that its speed does not exceed the maximum speed. For example, if the vehicle body enters Meguroku, its maximum speed may be set at 24 km/h, and if it enters Minato-ku, its maximum speed may be set at 15 km/h. The maximum hourly speed approved by each municipality may be set in advance.

### (3-2) by road type

The maximum speed may be limited depending on a type of road on which the mobility 1 is used. In the case of a single-seat mobility such as a bicycle or kickboard, unlike a car, it is usually not necessary to pay attention to the type of used road. However, it is possible to register the running road as a set area and set a maximum speed according to the type of road. For example, the single-seated mobility, such as a bicycle or kickboard, may be controlled so that the maximum speed on the sidewalk is lower than the maximum speed on the roadway by changing the maximum speed between use on the sidewalk and use on the roadway. In addition, the maximum speed may be controlled to be lower than normal when the mobility 1 is used within a school zone.

### (3-3) Vicinity of particular point

When a position at which the mobility 1 is used is near a particular point (a distance from the particular point is less than a predetermined value), the maximum speed may be controlled to be lower than normal. For example, it is possible to identify a point where a traffic accident can easily occur, such as an entrance to an expressway, an entrance to a building, etc. and to set the maximum speed lower than normal for the set areas in the vicinity of the specified points.

### (4) Detect that the speed exceeds the maximum speed and impose a penalty.

Alternatively, the maximum speed limit described above may be replaced by detecting that the maximum speed has been exceeded and imposing a penalty on the user depending on the number of times that the maximum speed has been exceeded or a duration of time that the maximum speed has been exceeded . The management server 20 continuously receives the position information and the speed information from the vehicle body. The management server 20 stores the setting area in association with the maximum speed. The management server 20 detects that the position of the vehicle body has entered the set area, acquires the maximum speed corresponding to the detected set area, and acquires the number of times or a duration of time that the speed received from the vehicle body exceeds the maximum speed. The management server 20 executes processing to impose a penalty on a user depending on the number of times or the duration of time that the speed thereof exceeds the maximum speed. The penalty may be, for example, to impose a monetary amount, or not to permit use for a period of time (a reservation cannot be made).

### <Reward for entering a set area>

In addition, for example, when the management server 20 or the computer equipped with the mobility 1 detects that the vehicle body of the mobility 1 has entered a preset set area, the following reward may be given to the mobility 1.

### (1) Reward for passing through a specific location

If the vehicle body of the mobility 1 passes through the set area, the user may be rewarded. The reward may be, for example, to reduce the usage fee for the mobility 1 for the user, to issue coupons for any goods or services, and to provide value such as points or cash. For example, a shopping district that is promoting sales can be designated as the set area for issuing coupons or for reducing the usage fees for the mobility 1 by passing through the shopping district. For example, setting a road in front of a new open facility as the set area, it is possible to issue a coupon or a point or to reduce the usage fee for the mobility 1 in response to passing in front of the facility. In this case, in order to reduce the usage fee, in the above example, charging an administrator of the shopping district or the facility may be done for the resource thereof.

### (2) Reward through a tourist spot

The user may be rewarded for arrival of the vehicle body of the mobility 1 near a tourist spot. For example, if you rent the mobility 1, which is available for half-day at a tourist site, it is possible to detect that the mobility 1 has parked near the particular tourist spot within the tourist site and reward the user accordingly. In this case, the reward can be realized by reducing the usage fee, issuing coupons, issuing points, etc. The resource of the reward may be charged to a company and/or a merchant at a tourism association or tourist destination.

### (3) Sponsorship area

With a sponsor set to a set area, the mobility 1 may be used free of charge or at a discount usage fee within the set area. For example, if the usage fee of the mobility 1 is set according to the usage time, the clock of the usage time may be stopped within the set area. In addition, the amount of time used in the set area may be measured and the amount of money according to the use time may be reduced from the usage fee when the usage fee is being adjusted. In this case, the sponsor may be charged all or part of the usage fee or discount amount within the set area.

### (4) Open speed in safety zone

The maximum speed may also be controlled to be higher than normal within a specified safety zone, such as in a particular facility. For example, an area that is expected to be able to use safely, such as squares, circuit rooms, and indoors, may be preset.

### <Limitation depending on the direction of travel>

Also, for example, the management server 20 or the computer provided with mobility 1 may provide limitation depending on the direction of travel of the mobility 1.

### (1) one-way

For example, the management server 20 or a computer equipped with mobility 1 may store one-way roads and continuously obtain the position information of the mobility 1 to identify the direction in which the mobility 1 is traveling, thereby the mobility 1 traveling backward on one-way roads can be detected. The management server 20 or the computer provided with the mobility 1 may notify the user of an alert by light or sound or send an alert message to the user terminal when a wrong-way use is detected. The management server 20 or the computer provided with the mobility 1 may also control to lower the maximum speed of the mobility 1 when a wrong-way use is detected. The computer provided by the management server 20 or the mobility 1 may also control so that the maximum speed decreases as the amount of time that the mobility 1 travels in the wrong-way direction increases. If the mobility 1 is travelling in the wrong-way direction for a predetermined period of time or longer, the motor may be stopped.

### (2) Gradient of road

The maximum speed may be changed according to a slope of the road on which the mobility 1 is traveling. For example, the traveling direction of the mobility 1 may be specified (e.g., the change in the position of the mobility 1 at a unit time may be linearly approximated and the dominant direction of the traveling direction between two points can be determined) and the maximum speed may be set lower than normal, especially when the traveling direction is in a direction of downhill.

### <Outline of the Invention>

### == First Embodiment ==

### [Item 1]

An operation support system that supports an operation of shared vehicle service, the system comprising:
a use request input unit that receives a request for use from a mobile terminal of a user who intends to use a vehicle, the request including a designation of the scooter and a destination station to be used; and
a use permission determination unit that permits use of the vehicle when there is an empty parking spot at the destination station.

### [Item 2]

The operation support system according to item 1 further comprising:
a ride-off image receiving unit that receives from the user terminal of the user, a parking image in which a state that the vehicle is parked at the parking spot of the ride-off station is captured, after the vehicle is ridden off; and
a ride-off image storage unit that stores the ride-off image so as to associate with the user.

### [Item 3]

The operation support system according to item 1, wherein:
the vehicle is communicatively connected to a locking device provided to the vehicle, and
the system further comprises a lock communicating unit that transmits an unlocking instruction to the locking device when use of the vehicle is permitted.

### [Item 4]

The operation support system according to item 1, wherein:
the vehicle comprises a code image including encoded vehicle identification information identifying the vehicle,
the mobile terminal captures the code image and decode the code image into the vehicle identification information, and
the decoded vehicle identification information is set to the request for use.

### [Item 5]

The operation support system according to item 1, further comprising:
a use permission responding unit that transmits to the mobile terminal whether use of the vehicle is permitted in response to the request for use, so as to attach an advertisement according to a position of a departure station where the vehicle is parked.

### [Item 6]

The operation support system according to item 2, wherein:
the ride-off image receiving unit transmits an advertisement corresponding to a destination station to the mobile terminal in response to a receipt of the parking image.

### [Item 7]

The operation support system according to item 1, further comprising:
a usage fee determining unit that determines a usage fee of the vehicle according to at least one of a number of the scooters parked at the destination station, a number of the vehicles parkable at the destination station, a use rate of the destination station, and a distance from the destination station to a station or a commercial facility, when the use of the vehicle is permitted.

### [Item 1]

A system for supporting an operation of shared service for single-seat vehicle, comprising:
a user request input unit that receives a use request including designation of a destination station from a terminal of a user who is to use the vehicle; and
a use permission determining unit that permits use of the vehicle when there is an empty spot at the destination station.

### == Second Embodiment ==

### [Item 1]

An operation support system for supporting an operation of a vehicle comprising:
a billing processing unit that charges a usage fee according to use of the vehicle; and
a profit-sharing processing unit that pays a provider of a station at which the vehicle is parked according to the usage fee,

### [Item 2]

The operation support system according to item 1, wherein:
the profit-sharing processing unit pays to both a first provider providing a departure station as to the use and a second provider providing a destination station as to the use.

### [Item 3]

The operation support system according to item 1 wherein:
the vehicle is electrically powered, and
the profit-sharing processing unit makes an adjustment to increase an amount of payment to the provider according to a low amount of electricity used by the vehicle.

### [Item 4]

The operation support system according to item 1 wherein:
the vehicle is electrically powered and includes a battery; and
the profit-sharing processing unit makes an adjustment to increase an amount of payment to the provider according to a more volume of a remaining battery charge of the battery provided to the vehicle parked at the station for a predetermined period. == Third Embodiment ==

### [Item 1]

An operation support system for supporting an operation of shared service of an electric vehicle, the system comprising:
a remaining amount acquiring unit that acquires a remaining amount of a battery; and
a replacement request transmitting unit that transmits to at least one replacer, a message indicating replacement of the battery.

### [Item 2]

The operation support system according to item 1 wherein:
a replacer acquiring unit that acquires information identifying a replacer who has replaced the battery;
a reward amount determining unit that determines a reward amount for the replacer according to the remaining amount of the battery; and
a payment processing unit that performs a process of paying the reward amount to the replacer.

### [Item 3]

The operation support system according to item 2, wherein:
the reward amount determining unit further changes the reward amount according to an attribute of the replacer.

### [Item 4]

The operation support system according to item 2, wherein:
the reward amount determining unit further changes the reward amount according to a station at which the electric vehicle is parked.

### [Item 5]

The operation support system according to item 1, further comprising:
a position information receiving unit that acquires position information indicating a position of the electric vehicle, wherein:
the replacement request transmitting unit notifies the at least one replacer of the position of the electric vehicle and the remaining amount of the battery of the electric vehicle.

### [Item 6]

The operation support system according to item 5, further comprising:
a station information storage unit that stores station information including a position of a station at which the electric vehicle can be parked; and
a station specifying unit that specifies the station at which the electric vehicle is parked according to the position information;
wherein:
   the replacement request transmitting unit notifies the at least one replacer of a number of electric vehicles and a total amount of the reward amount for each station.

### == Fourth Embodiment ==

### [Item 1]

An operation support system that supports an operation of a shared service of a vehicle, the system comprising:
a controller that limits a function of the vehicle according to an attribute of a user of the vehicle.

### [Item 2]

The operation support system according to item 1, wherein:
the controller limits a maximum speed of the vehicle in accordance with an age of the user.

### [Item 3]

The operation support system according to Item 1,
the controller makes a seat of the vehicle available according to an age of the user.

### [Item 4]

The operation support system according to item 1, wherein:
the vehicle assists propulsion of the vehicle by an electric motor, and
the controller varies an assist ratio by the electric motor according to an age of the user.

### [Item 5]

The operation support system according to item 1, wherein:
the controller limits a maximum speed of the vehicle in response to a low evaluation of the user.

### == Fifth Embodiment ==

### [Item 1]

An operation support system for supporting an operation of shared service of a vehicle, the system comprising:
a destination estimating unit for estimating a destination of the vehicle; and
a use permission determining unit that determines whether use of the vehicle is permitted according to the destination.

### [Item 2]

The operation support system according to item 1, further comprising:
a position acquiring unit that acquires a position of the vehicle, wherein
the destination estimating unit estimates the destination in accordance with the position.

### [Item 3]

The operation support system according to item 1 or 2, further comprising:
a demand number acquiring unit that acquires a demand number for the vehicle, wherein:
the use permission determining unit further determines whether use of the vehicle is permitted according to the demand number.

### [Item 4]

The operation support system according to one of items 1 to 3, further comprising:
an estimated usage time acquiring unit that acquires an estimated usage time of the vehicle, wherein:
the use permission determining unit determines whether use of the vehicle is permitted according to the estimated usage time.

### [Item 5]

The operation support system according to one of 1 to 4, further comprising:
an attribute acquiring unit that acquires an attribute of a user of the vehicle, wherein:
the use permission determining unit determines whether use of the permission is permitted according to the attribute.

### Reference Signs List

1 Bicycle
2 Station
11 Communication Device
12 Locking Device
13 User Terminal
20 Management Server
30 Communication Network

## Claims

1. An operation support system that supports an operation of shared scooter service, the system comprising:
a use request input unit that receives a request for use from a terminal of a user who intends to use a scooter, the request including a designation of the scooter and a destination station to be used; and
a use permission determination unit that permits the use of the scooter when there is an empty spot at the destination station.

2. The operation support system according to claim 1 further comprising:
an image receiving unit that receives from the user terminal of the user, a parking image in which a state that the scooter is parked at the parking spot of the destination station is captured, after the scooter is ridden-off; and
an image storage unit that stores the parking image so as to associate with the user.

3. The operation support system according to claim 1, further comprising:
a lock communicating unit that is communicatively connected to a locking device included in the vehicle, and transmits an unlocking instruction to the locking device s when use of the scooter is permitted.

4. The operation support system according to claim 1, wherein:
the scooter comprises a code image that is encoded from vehicle identification information identifying the scooter,
the user terminal captures the code image and decode the code image into the vehicle identification information, and
the decoded vehicle identification information is set to the request for use.

5. The operation support system according to claim 1, further comprising:
a use permission responding unit that transmits to the user terminal whether use of the scooter is permitted in response to the request for use, so as to attach an advertisement according to a position of a departure station where the scooter is parked.

6. The operation support system according to claim 2, wherein:
the image receiving unit transmits an advertisement corresponding to the destination station to the user terminal in response to a receipt of the parking image.

7. The operation support system according to claim 1, further comprising:
a price determining unit that determines a usage fee of the scooter according to at least one of a number of the scooters parked at the destination station, a number of the scooters parkable at the destination station, a use rate of the destination station, and a distance from the destination station to a station or a commercial facility, when the use of the scooters is permitted.

8. An operation support system that supports an operation of a vehicle, the system comprising:
a charging processing unit that charges a usage fee according to use of the vehicle; and
a profit-sharing processing unit that pays a portion of the usage fee to both a first provider that provides a departure station for the use and a second provider that provides a destination station for the use.

9. The operation support system according to claim 8, wherein:
the vehicle is electrically powered, and
the profit-sharing processing unit makes an adjustment to increase an amount of payment to the provider according to a low amount of electricity consumed by the vehicle.

10. The operation support system according to claim 8, wherein:
the vehicle is electrically powered and includes a battery, and
the profit-sharing processing unit makes an adjustment to increase an amount of payment to the provider according to a more volume of remaining charge of the battery provided to the vehicle parked at the station for a predetermined period.

11. An operation support system that supports an operation of electric vehicle equipped with a battery, the system comprising:
a billing processing unit that charges a usage fee according to use of the vehicle; and
a profit-sharing processing unit that pays a provider of a station at which the vehicle is parked according to the usage fee,
wherein the profit-sharing processing unit makes an adjustment to increase an amount of payment to the provider corresponding to a more remaining battery charge amount of the battery provided to the vehicle parked at the station for a predetermined period.

12. The operation support system according to claim 11, wherein:
the profit-sharing processing unit pays to both a first provider providing a departure station for the use and a second provider providing a destination station for the use.

13. The operation support system according to claim 11, wherein:
the profit-sharing processing unit makes an adjustment to increase an amount of payment to the provider corresponding to lowering an amount of electricity consumed by the vehicle is.

14. An operation support system that supports an operation of shared service of an electric vehicle, the system comprising:
a remaining amount acquiring unit that acquires a remaining amount of a battery;
a reward amount determining unit that determines a reward amount for a replacer who replaces the battery according to the remaining amount of the battery; and
a replacement request transmitting unit that transmits to at least one replacer, a message indicating replacement of the battery, the message including the remaining amount and the reward amount.

15. The operation support system according to claim 1, further comprising:
a replacer acquiring unit that acquires information identifying a replacer who has replaced the battery; and
a payment processing unit that performs a process of paying the reward amount to the replacer.

16. The operation support system according to claim 15, wherein:
the reward amount determining unit further changes the reward amount according to an attribute of the replacer.

17. The operation support system according to claim 15, wherein:
the reward amount determining unit further changes the reward amount according to a station at which the electric vehicle is parked.

18. The operation support system according to claim 14, further comprising:
a position information receiving unit that acquires position information indicating a position of the electric vehicle, wherein:
the replacement request transmitting unit notifies the at least one replacer of a position of the electric vehicle and the remaining amount of the battery of the electric vehicle.

19. The operation support system according to claim 14, wherein:
the replacement request transmitting unit includes in the message, a number of electric vehicles and a total amount of the reward amount for each station at which the electric vehicle park.

20. An operation support system for supporting an operation of shared service of a vehicle with a retractable seat, the system comprising:
a controller that makes the seat stored in accordance with an age of a user of the vehicle.

21. The operation support system according to claim 20, wherein:
the controller limits a maximum speed of the vehicle in accordance with an age of the user.

22. The operation support system according to claim 20, wherein:
the vehicle assists propulsion of the vehicle by an electric motor, and
the controller changes an assist ratio by the electric motor according to an age of the user.

23. The operation support system according to claim 20, wherein:
the controller limits a maximum speed of the vehicle according to a low evaluation of the user.

24. An operation support system that supports an operation of shared service of a vehicle, the system comprising:
a destination estimating unit for estimating a destination of the vehicle; and
a use permission determining unit that determines whether use of the vehicle is permitted according to the destination.

25. The operation support system according to claim 24, further comprising:
a position acquiring unit that acquires a position of the vehicle, wherein
the destination estimating unit estimates the destination in accordance with the position.

26. The operation support system according to claim 24 or 25, further comprising:
a demand number acquiring unit that acquires a demand number for the vehicle, wherein:
the use permission determining unit further determines whether use of the vehicle is permitted according to the demand number.

27. The operation support system according to one of claims 24 through 26, further comprising:
an estimated usage time acquiring unit that acquires an estimated usage time of the vehicle, wherein:
the use permission determining unit determines whether use of the vehicle is permitted according to the estimated usage time.

28. The operation support system according to one of claims 24 through 27, further comprising:
an attribute acquiring unit that acquires an attribute of a user of the vehicle, wherein:
the use permission determining unit determines whether use of the vehicle is permitted according to the attribute.
